# EUROPEAN PATENT SPECIFICATION

(11) **EP 1 031 023 B1**
(45) Date of publication and mention of the grant of the patent: **14.07.2004**
(21) Application number: 98952463.2
(22) Date of filing: 03.11.1998
(51) Int. Cl.: G01N 21/35

(54) **DETERMINATION OF ANIONIC SPECIES CONCENTRATION BY NEAR INFRARED SPECTROSCOPY**
BESTIMMUNG DER KONZENTRATION VON ANIONISCHEN SUBSTANZEN MITTELS SPEKTROSKOPIE IM NAHEN INFRAROT
DETERMINATION DE LA CONCENTRATION D'ESPECES ANIONIQUES PAR SPECTROSCOPIE INFRAROUGE PROCHE

(30) Priority: 12.11.1997 CA 2220913
(43) Date of publication of application: 30.08.2000
(73) Proprietor: Kvaerner Canada Inc., Vancouver, British Columbia V6J 1C7 (CA); Pulp and Paper Research Institute of Canada, Quebec H9R 3J9 (CA)
(72) Inventor: KESTER, Michael, Richmond, British Columbia V7E 6M2 (CA); LECLERC, Denys, F., Vancouver, British Columbia V5S 4T3 (CA); TRUNG, Thanh, P., Vancouver, British Columbia V5Z 1B6 (CA)
(74) Representative: Denmark, James
(86) International application number: PCT/CA1998/001024
(87) International publication number: WO 1999/024815

(56) References cited:
- US-A- 5 364 502
- US-A- 5 616 214

## Description

### FIELD OF THE INVENTION

This invention relates generally to a method for determining anionic species in aqueous solution, particularly pulp process liquors of cellulosic pulp manufacturing processes, by near infrared spectrophotometry and more particularly to the use of an on-line method for determining concentration parameters of said process liquors, and subsequent control of said cellulosic pulp manufacturing process by use of said determined parameters.

### BACKGROUND OF THE INVENTION

Kraft pulping is performed by cooking wood chips in a highly alkaline liquor which selectively dissolves lignin and releases the cellulosic fibers from their wooden matrix. The two major active chemicals in the liquor are sodium hydroxide and sodium sulfide. Sodium sulfide, which is a strong alkali, readily hydrolyses in water to produce one mole of sodium hydroxide for each mole of sodium sulfide. The term "sulfidity" is the amount of sodium sulfide in solution, divided by the total amount of sodium sulfide and sodium hydroxide and is usually expressed as a percentage (% S) which varies between 20 and 30 percent in typical pulping liquors. The total amount of sodium hydroxide in solution, which includes the sodium hydroxide produced as the hydrolysis product of sodium sulfide, is called either "effective alkali" (EA), expressed as sodium oxide, Na₂O before pulping, or residual effective alkali (REA) after pulping. Timely knowledge of these parameters would enable good control of the pulping process.

At the beginning of the kraft process, "white liquor" is fed to a digester. This white liquor contains a high amount of effective alkali up to 90 g/L, as Na₂O. At intermediate points in the digester, spent liquor, or "black liquor," is extracted from the digester. This spent liquor contains low levels of effective alkali - less than 30 g/L, as Na₂O and also contains large amounts of organic compounds which, generally, are burned in a recovery furnace. Resultant inorganic residue, called smelt, is then dissolved to form "green liquor" which has a low concentration of effective alkali and a high concentration of sodium carbonate - up to 80 g/L, as Na₂O. White liquor is regenerated from the green liquor by causticizing the carbonate through the addition of lime. After the recausticizing operation, a small residual amount of sodium carbonate is left in the white liquor. The combined amount of sodium hydroxide, sodium sulfide and sodium carbonate is called total titratable alkali (TTA). The causticizing efficiency (CE) is usually defined as the difference in the amounts, as Na₂O of sodium hydroxide between the white and green liquors, divided by the amount, as Na₂O of sodium carbonate in the green liquor. Sodium sulfate, sodium carbonate and sodium chloride represent a dead load in the liquor recycling system. The reduction efficiency (RE) is defined as the amount, as Na₂O of green-liquor sodium sulfide, divided by the combined amounts, as Na₂O, of sodium sulfide, sodium sulfate, sodium thiosulfate and sodium sulfite in either green liquor or the smelt.

The timely knowledge of the white-liquor charge of EA and of black-liquor EA would close the control loop in the digester and optimise for example, production and product quality and chemical utilization, of alkali and lime consumption. The control of sodium sulfide, TTA and of non-process electrolytes, such as sodium chloride and potassium chloride would also have a beneficial impact on closed-cycle kraft-mill operations. For example, environmentally-driven reduction of sulfur losses generally increases liquor sulfidity, thereby creating a sodium:sulfur imbalance that needs to be made up through the addition of caustic soda. Another important need is the control of TTA in green liquor, which is most easily done by adding weak wash to a smelt dissolving tank. The value of the green-liquor TTA is important because it is desirable to maintain the TTA at an optimal and stable level so as to avoid excess scaling while obtaining a high and stable white liquor strength. The ongoing development of modem chemical pulping processes has thus underscored the need for better control over all aspects of kraft-mill operations and more efficient use of all the chemicals involved in the process by knowledge of the concentration of aforesaid species in the liquors.

Sodium carbonate is difficult to characterize and quantify in situ because of a current lack of on-line sensors which can tolerate long-term immersion in highly alkaline liquors. Important economic benefits could result from causticizing control with a reliable sensor for sodium carbonate. Accurate causticization is critical for the uniform production of high-strength white liquor in that adding too much lime to the green liquor produces a liquor with poorly settling lime mud, whereas adding too little produces a liquor of weak strength. Determining the relative quantities of EA and carbonate in green and white liquor is thus important for controlling the causticizing process.

Various methods of on-line measurements of either EA or sodium hydroxide have been proposed. The use of conductivity methods for green and white liquors is well-established as a pulp and paper technology. Unfortunately, conductivity probes are prone to drift due to scaling, as well as interferences from other ionic species. Therefore, these devices require frequent maintenance and re-calibration. An early example of such measurements describes a method that can determine the EA by neutralizing hydroxide ions with carbon dioxide (1). The conductivity of the solution is measured before and after treatment. The difference in conductivities is proportional to the hydroxide ion concentration of the liquor. High levels of sodium hydroxide, however, will increase the neutralizing time. In white liquors, this time is too long for effective process control purposes. Chowdhry (2) describes an analysis of kraft liquors that uses differences in conductivity before and after precipitation of carbonates using BaCl₂, an approach which is not practical.

However, even though conductivity probes may not be suitable for on-line measurements of EA in white or green liquors, this kind of sensor is also used with the liquor produced during the early stages of the pulping in upper-recirculation digester lines. An example of a successful commercial version of an automatic titrator (3) involves titrating alkali with sulfuric acid until no change in conductivity is observed. This determination is straightforward and works very well for the impregnation and early stages of the cook, but not for the extraction stage. With extraction liquors, a more complex pattern is observed when significant quantities of organic acids and black-liquor solids appear in the liquor, and the end-point determination becomes more difficult near the end of the cook. On-line titration methods used in pulp mills suffer from frequent maintenance problems. Thus, most mill-site measurements still rely on standard laboratory methods.

At present, control of digesters is performed by keeping the chip and white liquor feeds at preset levels. These levels are determined by the overall production rate, and control is achieved by adjusting the temperature profile of the cook and determining the resultant blow-line kappa number. The philosophy behind this strategy is that alkali consumption during the removal of lignin is proportional to chip feed at a given kappa number. Alkali not consumed in the impregnation phase is then available for the bulk removal of lignin that occurs in the pulping zone. This is usually performed by predicting the pulp yield with the H-factor (4). The disadvantage of this method is that it assumes uniform chip moisture content, pH and density, as well as digester temperature, etc. Since the pulp must be analysed in the laboratory for lignin content, this makes it difficult to close the control loop in a timely manner. Ideally, a much better way of controlling digester operations would be to measure the EA concentration in black liquor directly on-line at an appropriate time in the cooking process on both the upper and lower (main) recirculation loops in the digester, as well as the REA concentration on the extraction line at the end of the cook. An on-line method that would give a direct measurement of the EA throughout a cook is therefore needed.

Methods relying on spectroscopic methods have been proposed because of the limitations of titration and conductivity methods for liquor analysis. It is known that hydrosulfide ions absorb very strongly in the ultraviolet at 214 nm (5, 6, 7). However, this absorption is so strong that a very small pathlength, i.e. less than 10 microns is needed to get a measurable signal which yields a linear calibration curve (8). A cell with such a small optical path is prone to plugging and, hence, not practical for on-line applications. Extensive 1:1 x 10³ or 10⁴ dilution is practiced, which results in inaccurate results and increases the risk of sulfide being oxidized.

The dilution approach has also been used in techniques such as capillary zone electrophoresis which use UV detectors (9, 10). Errors in sulfidity measurements exceeding 50% were reported. Accordingly, a method which does not need dilution is needed.

Infrared spectroscopy can distinguish between the inorganic and organic components of liquors and a number of infrared methods have been proposed. Faix et al (11) propose a method for organic compounds in black liquor, based upon on-line infrared attenuated reflectance (ATR) measurements between 1400 and 1550 cm⁻¹ A similar method for kappa number determination (12) correlates the increase in the integrated band intensity at 1118 cm⁻¹ with decreasing kappa number. Neither of these methods can be used for process control because of interferences from carbohydrates and uncertainties in the value of process variables such as liquor-to-wood ratio. Leclerc et al. (13, 14, 15, 16) teach that one can measure EA and dead-load components in kraft liquors with FT-IR ATR, and that one can use these measurements to control the operations of important process units involved in the manufacture of kraft pulp such as the digester, recausticizers and recovery boiler. However, ATR optical reflecting elements immersed in very alkaline liquors, and/or acidic or oxidizing cleaning solutions, are prone to be vulnerable to etching and/or scaling of their surface, which necessitates frequent replacement, re-polishing and re-calibration of the elements. Materials that are resistant to caustic, acidic. or oxidizing environments are few and cannot be used for ATR measurements in the mid-infrared region of interest due to infrared absorption of the material itself. ATR elements have also slightly differing optical paths and surface properties that exhibit memory, which makes the transfer to other instruments of calibrations developed on one instrument very difficult to achieve without substantial expenditures of time and labour.

Recent advances in FT-IR instrumentation and software have made possible the more widespread use of the near-infrared region of the spectrum for determining aqueous components such as dissolved electrolytes. Each ionic species causes a unique and measurable modification to the water bands that is proportional to its concentration. Advantages over previous techniques include: no sample preparation, short measurement times, relatively long optical paths and the possibility of using fiber-optic technology for real-time, in situ measurements. Also, temperature effects and interferences by other cations and anions can be modeled in this spectral region through the use of partial least-squares (PLS) multi-component calibration techniques. PLS is a well-known multi-component calibration method (17, 18). This method enables one to build a spectral model which assumes that the absorbance produced by a species is linearly proportional to its concentration. This has been shown by (19, 20, 21, 22, 23). However, because of its relatively intense water bands, the spectral region situated from 4000 to 8000 cm⁻¹ is only suitable for optical paths ranging from 0.5 to 1.5 mm, a limitation which precludes the accurate determination of weakly absorbing electrolytes such as carbonate, sulfide and chloride. Sodium hydroxide, on the other hand, generates a strong signal that is easily detectable in this region (24, 25, 26). The concentration of dissolved electrolytes, such as sodium hydroxide, carbonate and chloride concentrations in aqueous streams, such as seawater or white liquor have been measured. Accurate results were obtained for hydroxide but not for the other ions. Similar results were obtained more recently (27) with a PLS calibration. The correlation data obtained for sulfide and carbonate are not reliable, and cannot be used as a basis towards developing a method for controlling the manufacture of cellulosic pulp. A near-infrared PLS method, which can measure sodium sulfide and TTA with an accuracy of 1 to 2 g/L has been described (28). The calibration method, however, could not distinguish between sodium carbonate and sodium hydroxide because of the similar spectral signatures produced by these two ions, as well as the relative weakness of the carbonate spectrum. Reference 24 through 28 demonstrate that hydroxide is easy to measure in the range 4000 to 8000 cm⁻¹, while other components such as carbonate and sulphide are not. The results obtained (27, 28) strongly suggest that a control method for a pulp manufacturing process based on the simultaneous and separate determination of hydroxide, carbonate and sulfide would be very difficult with the small-bore flow cell used for their work. This type of flow cell would also be susceptible to plugging by suspended solids and fibers, thereby rendering the method unworkable. The spectral region situated from 8000 to 12000 cm⁻¹ is more amenable to the use of longer optical paths ranging from 3 to 20 mm, which makes it much easier to couple a wide-bore flow cell to any system of pipes used in the mill. For example, (23, 29) a PLS calibration has been used to resolve the hydroxide and chloride ion spectrum near 10500 cm⁻¹. In both cases, however, the range of concentration was extremely wide (0 to 5 moles/L), the spectra were somewhat noisy, and the precision was no better than 5 g/L for both species. For the spectral information to be useful for process control engineers, the correlation data must be accurate to within one percent and the level of precision, in the range of 0.5 to 1 g/L. The level of precision reported is, thus, inadequate for process control.

A recent publication (30) broadly discloses a method of controlling the causticizing reaction for producing a white liquor having multiple white liquor components from a green liquor having multiple green liquor components, comprising the steps of measuring a characteristic of each of said green liquor components; measuring a characteristic of each of said white liquor components; evaluating said green liquor component characteristics and said white liquor component characteristics in a non-linear, application adaptable controller to produce a causticizing control signal; and controlling said causticizing reaction responsive to said causticization control signal to produce white liquor wherein the characteristics are generally measured by near infrared or polarographic measurement devices and evaluating the characteristics in a non-linear, application adaptable controller to produce a causticizing control signal for controlling the amount of time to a shaker. However, the specific multiple component liquid process analyzer of use in the disclosed process would require a pathlength of less than 3 mm at 1100 to 2200 nm to avoid complete saturation of the incident light beam by water molecules in the sample.

There is, therefore, a need for the rapid determination of effective alkali, residual alkali, sodium sulfide and sodium carbonate, particularly, in pulping process liquor by spectrophotometric means which provide for a process liquor pathlength of greater than 3 mm without saturation of the incident radiation beam by water molecules of the sample.

### LIST OF PUBLICATIONS

1. U.S. Patent No. 3,553,075 - Rivers
2. U.S. Patent No. 3.607,083 - Chowdhry
3. U.S. Patent No. 3,886,034 - Noreus
4. K. E.Vroom, Pulp Paper Mag.Can., 1957, 58(3), 228
5. U.S. Patent No. 5,582,684 - Holmquist and Jonsson
6. D. Peramunage, F. Forouzan, S. Litch. Anal. Chem., 1994, 66, 378-383
7. Paulonis et al. PCT Application WO 91/17305. Liquid Composition Analyser and Method
8. Paulonis et Krishnagopalan. Kraft White and Green Liquor Composition Analysis. Part I: Discrete Sample Analyser. J. Pulp Paper Sci., 1994, 20(9), J254-J258
9. Salomon, D.R., Romano, J.P. Applications of Capillary Ion Analysis in the Pulp and Paper Industry. J. Chromatogr., 1992, 602(1-2), 219-25
10. Rapid Ion Monitoring of Kraft Process Liquors by Capillary Electrophoresis. Process Control Qual., 1992, 3( 1-4), 219-271.
11. U.S. Patent No. 4,743,339. Faix et al.
12. Michell. Tappi J., 1990, 73(4), 235.
13. Leclerc et al. J. Pulp Paper Sci., 1995, 21(7), 231
14. U.S. Patent No. 5,282,931 - Leclerc et al.
15. U.S. Patent No. 5.364,502 - Leclerc et al.
16. U.S. Patent No. 5,378,320 - Leclerc et al.
17. Haaland, D.M. and Thomas, E.V. Anal. Chem., 60(10): 1193-1202 (1988)
18. Haaland, D.M. and Thomas, E.V. Anal. Chem., 60(10): 1202-1208 (1988)
19. Lin and Brown. Appl. Spectrosc. 1992, 46(12), 1809-15
20. Lin and Brown. Environ. Sci. Technol. 1993, 27(8), 1611-6
21. Lin and Brown. Anal.Chem., 1933, 65(3), 287-92
22. Lin and Brown. Appl. Spectrosc. 1993, 47(1), 62-8
23. Lin and Brown. Appl. Spectrosc. 1993, 47(2), 239-41
24. Watson and Baughman. Spectroscopy, 1987, 2(1), 44
25. Hirschfeld. Appl. Spectrosc., 1985, 39(4), 740-1
26. Grant et al. Analyst., 1989, 114(7), 819-22
27. Vanchinathan, S., Ph.D. Thesis. Modeling and control of kraft pulping based on cooking liquor analysis, Auburn University, 1995. Tappi J., 1996, 79(10):187-191
28. U.S Patent No. 5,616,214 Leclerc
29. Phelan et al. Anal. Chem., 1989, 61(3), 1419-24
30. WO98/10137 - Fisher Rosemont Systems Inc: March 12 1998

### SUMMARY OF THE INVENTION

It is an object of the present invention to provide a rapid method for determining the concentration of OH⁻, CO₃⁼ and HS⁻ species in aqueous solution, particularly in solution containing all three species.

It is a further object to provide a rapid method for determining the concentration of organic species present in a pulping process liquor, particularly, in the presence of at least one of the species selected from OH⁻, CO₃⁼ and HS⁻.

It is a further object to provide a rapid method for determining the concentration of effective alkali, residual alkali, sodium sulphide, sodium carbonate and dead-load components such as chloride and dissolved organic species in pulp liquors.

It is a yet further object to provide said rapid process which does not need frequent equipment maintenance, sample pre-treatment or chemical reagents.

It is a still yet further object to provide said method which, optionally, allows a plurality of pulp liquor process streams to be multiplexed to a single analyser in a fibre-optic network.

It is a further object to provide apparatus for effecting said methods.

Accordingly, the invention provides in one aspect a method for determining the concentration of anionic species selected from the group consisting of OH⁻, CO₃⁼, HS⁻ and organic species in an aqueous sample solution, said method comprising subjecting said solution to near infrared radiation at a wavelength region of wave numbers selected from about 7,000 to 14,000 cm⁻¹ through a solution path length to obtain spectral data for said solution; obtaining comparative spectral data for said anionic species at known concentrations in aqueous solutions; and correlating by multivariate calibration the relationship between said spectral data of said sample solution and said comparative spectral data to determine said concentration of said anionic species in said sample solution, characterised in that said path length is at least 3mm.

Preferably, the wavelength is selected from 7,000 to 12,000 cm⁻¹, and more preferably 9,000 to 12,000 cm⁻¹.

The spectral data is preferably obtained by transmittance spectrophotometry, and more preferably, from a transmission cell. The relationships between the spectral data of the sample and the comparative spectral data are, preferably, obtained with a partial-least-squares multivariate calibration.

In a preferred aspect the invention provides a method for controlling the operation of individual unit operations within a cellulosic pulp manufacturing process, which method comprises the steps of:
subjecting samples of process liquors to near infrared radiation at a wavelength region of wave numbers from about 7,000 to 14,000 cm⁻¹ through a process liquor path length to produce spectra of said liquor;
recording the spectrum of different mixture solutions of synthetic and process liquors having known concentration parameters;
correlating by multivariate calibration the relationship between the spectra of the process liquor samples and the different mixture solutions of known concentration parameters so as to simultaneously determine concentration parameters in the process liquor samples; and
adjusting the individual unit operations of the cellulosic pulp manufacturing process as required by controlling at least one process parameter to bring the final product of said unit operation to a desired value, wherein said final product is determined in part by concentration parameters in said process liquors, as determined by the near infrared measurement of said concentration parameters, characterised in that said path length is at least 3mm.

Thus, the invention, in a preferred aspect, provides a rapid method for the control of a cellulosic pulp manufacturing process via on-line measurement of chemical concentration parameters in process liquor streams with near infrared radiation. The method eliminates the need for (i) manual sampling, (ii) frequent equipment maintenance, (iii) a dedicated instrument at each sampling point, (iv) compensation for instrumental drift, and, optionally, (v) an environmentally controlled spectrometer housing near the sampling location(s).

The method of the present invention uses "wide bore" near infrared spectrometry, i.e wherein the cell path of the solution subjected to the near infrared radiation is at least 3 mm, preferably 3-20 mm, and more preferably 5-12 mm. This clearly distinguishes the invention over prior art methods (27.28) which teach the use of "narrow-bore" path lengths of <2 mm, when measuring the first overtone of the near infrared (approximately 4,000-7,000 cm⁻¹), or <1 x 10⁻³ cm when measuring the mid-infrared region (approximately 4,000-400 cm⁻¹),

The present invention is thus of significant value in providing for the rapid determination of the alkalinity OH⁻, CO₃⁼ and HS⁻ levels in pulp liquors, which contains inter alia, all three species in varying amounts.

Surprisingly, the invention provides that although signal strengths of the water absorption bonds diminish with increasing wavenumber from the infrared to the visible spectral range, increasing the sample path length enables sufficient signal absorption to occur in multi anionic species-containing solutions, within the background noise to enable enhanced accurate spectral data on each of the anionic species to be obtained. Such rapid and accurate anionic species concentration of the order of ±1 g/L in pulp liquors allows for good and beneficial control of pulp liquor concentrations.

Cellulosic pulp cooking liquor which has been extracted from the cooking process at some point after coming into contact with the wood chips is collectively referred to as black liquor. The actual composition of any black liquor can vary substantially with a strong dependence on the time and location of extraction, the original composition of the wood and/or liquor upon entering the digester, and the cooking conditions. The dissolved substances in black liquor fall into two primary categories: total inorganic content and total organic content. The inorganic content, which constitutes 25 to 40% of the dissolved substances, consists primarily of anionic species such as hydroxide, hydrosulfide, carbonate, chloride, sulfate, sulfite and thiosulfate, where sodium is the primary counter ion. The organic content, which constitutes the remaining 60 to 75% of the dissolved substances, can be further divided into three main categories: lignin - aromatic organic compounds (30-45%), carbohydrates - hemicelluloses and cellulose degradation products (28-36%), and extractives - fatty and resinous acids (3-5%). These organic species provide unique contributions to the overall electromagnetic spectral signature of a black liquor sample. Therefore, it is possible to relate the near infrared spectrum of a black liquor sample to the total or constituent organic content of that liquor for calibration purposes. In this way, it is possible to simultaneously measure, for example, the lignin and the sodium hydroxide (or EA) content of a black liquor extracted from a digester. In a more general sense, the total organic content and the total inorganic content, as well as the sum of these two constituents (i.e., the total dissolved solids) would also be quantifiable in a similar manner. Surprisingly, the transmission of near infrared radiation through black liquor is still great enough to quantify these components even when a pathlength of 10 mm is used.

Thus, the present invention provides a rapid method for determining effective alkali, residual effective alkali, sodium sulfide, sodium carbonate, and dead-load components, such as sodium chloride, sodium sulfite, sodium sulfate, sodium thiosulfate and dissolved organic species in process liquors and controlling appropriate parameters in the cellulosic pulp manufacturing process based on the determined values. The proposed method largely eliminates the need for frequent equipment maintenance, sample pretreatment and the use of chemical reagents. High sample throughput can also be obtained by allowing many process streams to be multiplexed to a single analyser through an optional fiber-optic network.

Samples of process liquors are analysed by near-infrared Fourier transform infrared (FT-IR) spectrometry. Spectra are collected using a flow-through wide-bore transmittance accessory. The absorbance of the liquor is measured over a predetermined wavelength region. The absorbance is then correlated through a multivariate regression method known in the art as partial least-squares (PLS) with the concentration of the absorbing compound. This correlation is made by comparing results previously obtained with standard samples. The chemical composition of the liquor is then calculated. The process samples are also analysed with either standard CPPA, SCAN or TAPPI analytical methods, to establish a correlation with the data obtained by near infrared spectrometry.

The on-line method for EA and REA may primarily be used for controlling the operation of either batch or continuous digesters. The blow-line kappa number can then be predicted by using its well-known relationship with REA. The method can also be used for controlling carbonate and hydroxide levels in green and white liquors. The causticizing efficiency could also be calculated. In summary, this new sensing and control method could replace automatic titrators and conductivity sensors. It would also give previously unavailable information on the carbonate levels in process liquors, while improving the control of scaling in multi-effect evaporators.

In a further aspect the invention also provides an apparatus for determining the concentration of an anionic species selected from the group consisting of OH⁻, CO₃⁼ and HS⁻ in an aqueous solution, said apparatus comprising sample means for providing a sample of said solution with a solution path length; Fourier transform near-infrared means for subjecting said solution over said path length to near-infrared radiation at a wavelength region of wave numbers selected from about 7,000 to 14,000 cm⁻¹; and spectral recordal means for recording spectral data of said radiation after subjecting said solution to said radiation, characterised in that said path length is at least 3mm.

### BRIEF DESCRIPTION OF THE DRAWINGS

In order that the invention may be better understood, preferred embodiments will now be described by way of example, only, wherein:-
FIG. 1 is a diagrammatic view of the recovery and recausticizing process system, complete with sensing and control apparatus according to one embodiment of the present invention;
FIG. 2 is a diagrammatic view of a pulp digester, complete with sensing and control apparatus according to a further embodiment of the present invention;

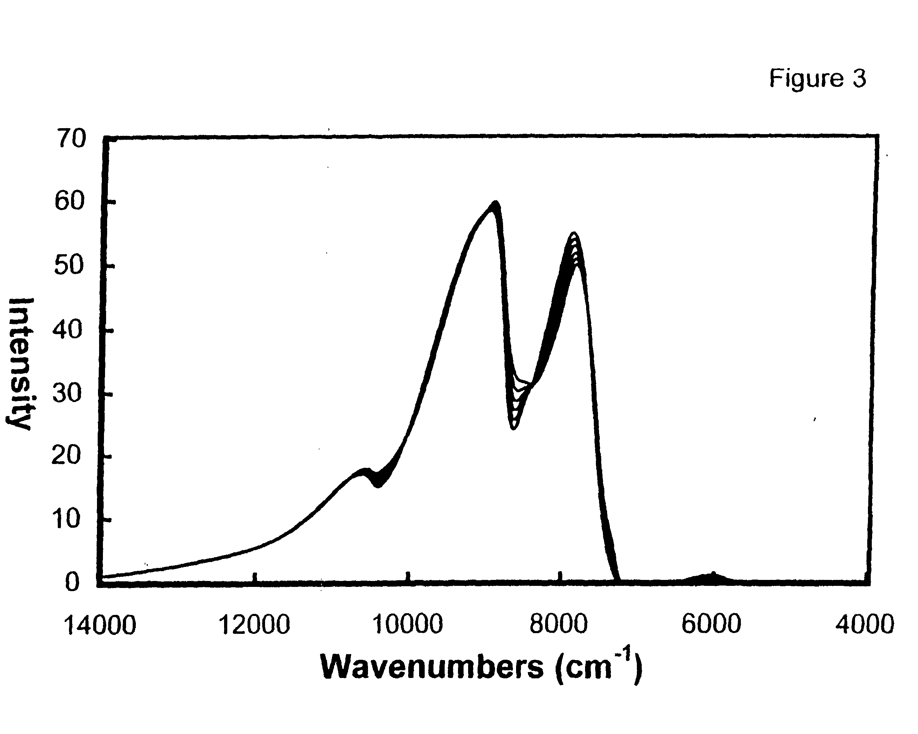

FIG. 3 is a graph of absorbance versus reciprocal centimetres showing the change in near-infrared absorbance with respect to an air reference between 4000 and 14000 wavemembers for a range of temperatures selected from between 5 and 25°C;
FIG. 4 is a PLS calibration graph of the predicted versus actual EA concentration for the three-component PLS calibration model;
FIG. 5 is a PLS calibration graph of the predicted versus actual sodium carbonate concentration for the three-component PLS calibration model;
FIG. 6 is a PLS calibration graph of the predicted versus actual hydrosulfide concentration for the three-component PLS calibration model;
FIG. 7 is a graph of absorbance versus reciprocal centimetres showing the change in near-infrared absorbance for a range of diluted liquors with respect to a 10 g/L EA reference between 4000 and 14000 wave numbers;
FIG. 8 is a graph of absorbance versus percent black liquor added showing the change in near-infrared absorbance at 11500 cm⁻¹ for a range of diluted black liquors with respect to a 10g/LEA reference;
FIG. 9 is a PLS calibration graph of the predicted versus actual EA concentration for the three-component PLS calibration model with sodium chloride added as an interference;
**FIG. 10** is a PLS calibration graph of the predicted versus actual sodium carbonate concentration for the three-component PLS calibration model with sodium chloride added as an interference;
**FIG. 11** is a PLS calibration graph of the predicted versus actual sodium sulfide concentration for the three-component PLS calibration model with sodium chloride added as an interference;
**FIG. 12** is a diagrammatic view of sensing apparatus of use in the practice of the present invention;
**FIG. 13** is a plot of the concentration of white liquor being fed into the B digester at the Bowater, Inc. kraft pulp mill in Thunder Bay, Ontario, over a period of approximately nineteen days, as measured by FT-IR and by manual titration;
**FIG. 14** is a plot of the concentration of white liquor, upper circulation black liquor, lower circulation black liquor, and extraction zone black liquor at the Bowater, Inc. kraft pulp mill in Thunder Bay, Ontario, over a period of approximately four days, as measured by FT-IR and manual titration.
**FIG. 15** is a calibration graph concerning effective alkali;
**FIG. 16** is a calibration graph concerning organic solids; and
**FIG. 17** is a calibration graph concerning total solids.

### DESCRIPTION OF PREFERRED EMBODIMENTS

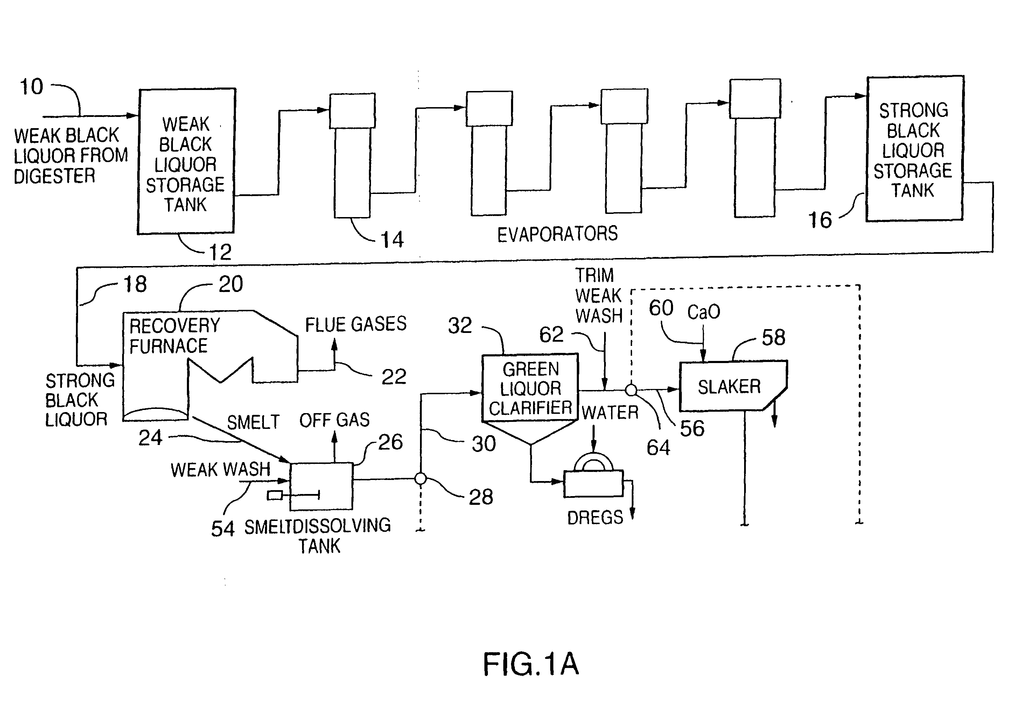

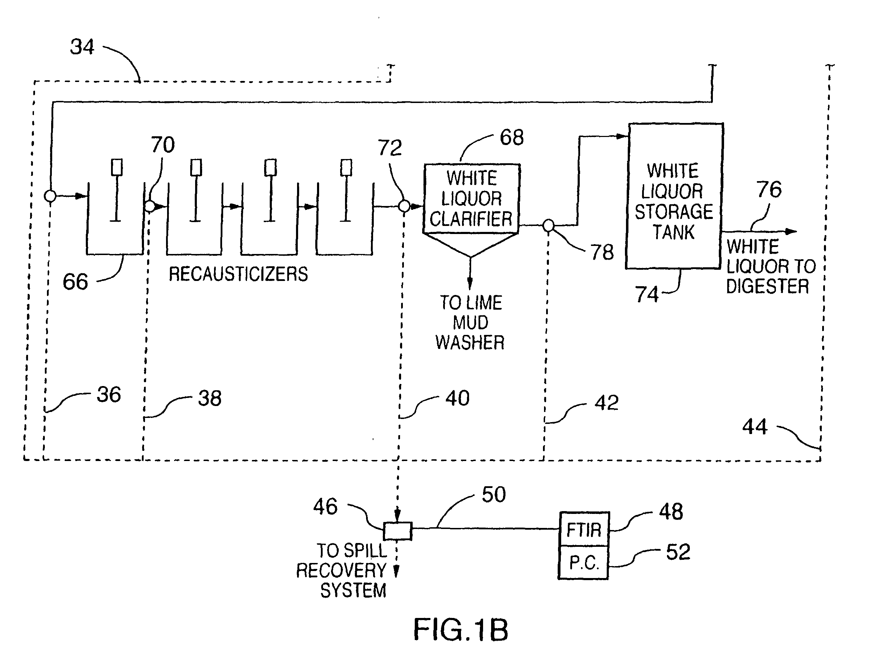

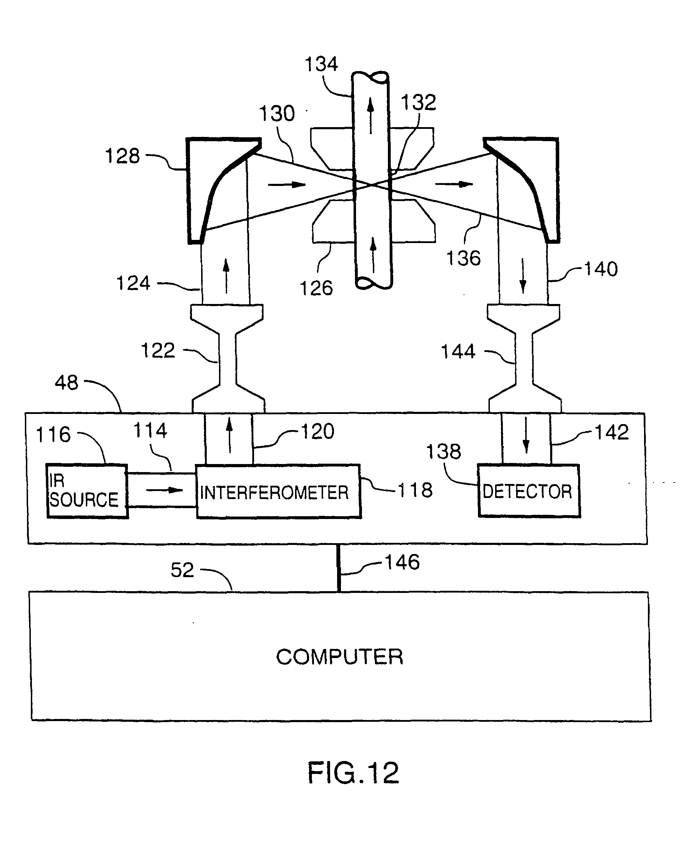

**FIG. 1** is a diagrammatic view of a recovery system, complete with sensing apparatus, according to one embodiment of the present invention. The sensing apparatus shown in **FIG. 12** is further described, hereinafter.

Referring to **FIG. 1**, weak black liquor recovered from the digestion process **10** may be temporarily stored in a weak black liquor storage tank **12** before being concentrated through multiple-effect evaporators **14** to form strong black liquor which is stored in a strong black liquor storage tank **16**. Line **18** delivers the strong black liquor from the strong black liquor storage tank **16** to the recovery furnace **20** to generate flue gases **22** and smelt **24**. The smelt **24** flows to the smelt dissolving tank **26** to form green liquor. Green liquor samples are taken at sample withdrawal point **28** in line **30** leading to the green liquor clarifier **32**. The samples are fed through a 1.25 cm diameter conduit **34**, optionally merged with other optional sample streams **36, 38, 40, 42** and/or **44**, through either a transmittance-mode or a reflectance-mode flow-cell **46**, well-known in the art. Infrared light from an infrared source which is integral to a Fourier transform spectrometer **48** is brought to the flow-cell **46** by means of a direct optical coupling with mirrors or by a fibre optic cable **50**. Some of the infrared light is absorbed by the liquor and the residual light is returned to the Fourier transform spectrometer by means of either a direct optical coupling with mirror or by a second fibre optic cable **50**. The spectrometer **48** records the near-infrared single-beam spectrum of the liquor. Readings from the spectrometer **48** are transferred to a computer **52** which calculates the individual component concentrations of the liquor, such as, sodium hydroxide, sodium sulphide, sodium carbonate, and optionally, sodium chloride with the use of a PLS multicomponent calibration model. The concentration parameters of conversion efficiency and/or causticity and/or total titratable alkali (TTA) are calculated from said concentrations automatically by the computer **52**.

The concentration parameter of TTA is used to automatically control the flow of weak wash **54** entering the smelt dissolving tank so as to obtain an optimal value of TTA in the unclarified green liquor leaving the smelt dissolving tank **26** through flow line **30** which transports said liquor to the green liquor clarifier **32.**

Liquor in line **56** flows from the green liquor clarifier **32** and enters the slaker **58** where a variable quantity of calcium oxide is added through line **60** to form calcium hydroxide. Trim weak wash **62** is added to line **56** immediately before sample withdrawal point **64** which transfers a sample through line **44** to the flow cell **46** for analysis. The concentration parameter ITA is calculated by the computer **52** and used as feedback control of the trim weak wash line **62** flow rate, and/or feedforward control of the calcium oxide line feed rate **60** to the slaker **58**.

Upon leaving the slaker, the liquor flows through a series of three or more recausticizers **66** which allow most of the sodium carbonate to react with the calcium hydroxide to form sodium hydroxide and calcium carbonate. The resulting suspension then proceeds to the white liquor clarifier **68**. The partially recausticized white liquor is sampled from withdrawal point **70** and/or **72** where it is delivered to the flow cell **46** where the concentration. of sodium hydroxide, sodium sulphide, sodium carbonate, and optionally, sodium chloride, are simultaneously determined. The concentration parameter of causticity is calculated from these values and used as fast feedback control of the feed rate of calcium oxide to the slaker through line **60** if withdrawal point **70** is used or slow feedback control of said feed rate if withdrawal point **72** is used. The clarified white liquor leaves the white liquor clarifier **68** and flows to the white liquor storage tank **74** where it is ready for use in the digestion process through line **76**. If the retention time of the white liquor clarifier **68** is sufficiently short. as in the case of pressure or disk filters used for clarifying, withdrawal point **78** may be used in place of withdrawal point **72**.

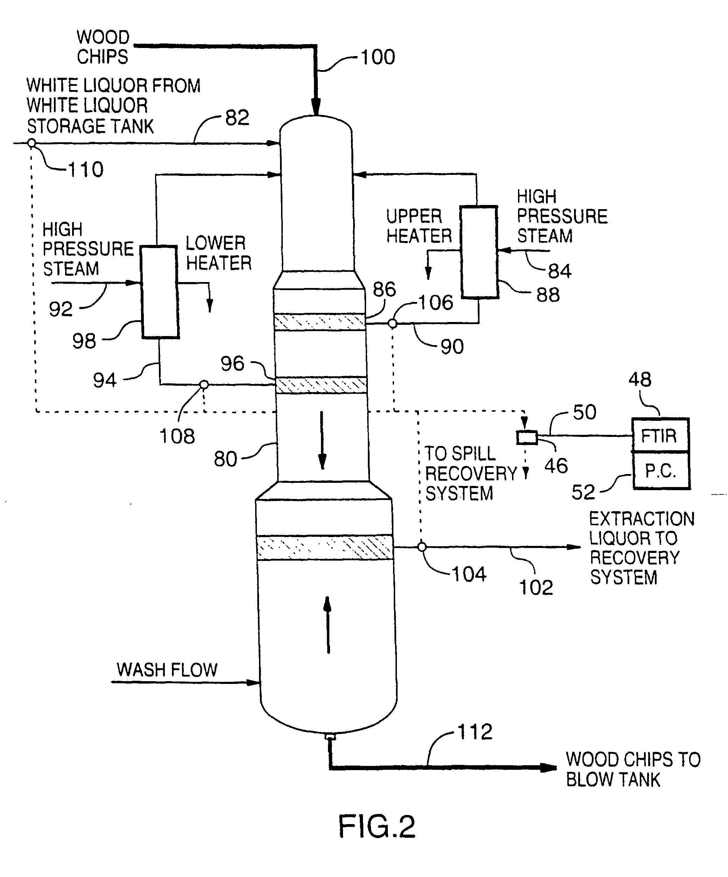

**FIG. 2.** shows a diagrammatic representation of a continuous type Kamyr digester and of a control system as embodied by the invention. This control system may be used to monitor the effective alkali (EA) consumption during the impregnation and cooking stages of a continuous cooking pulping operation. EA is a concentration parameter defined as the sodium hydroxide plus half of the sodium sulfide (expressed as Na₂O) present in a mill liquor. Referring to **FIG. 2,** a digester **80** is shown with a white liquor supply line **82** from the white liquor storage tank (not shown). The liquor in the digester **80** is indirectly heated through a transfer line by high pressure steam supplied through a steam supply line **84**. Black liquor is withdrawn from the digester **80** through the upper circulation screen **86** and then sent through an upper heater **88** using a recirculating loop **90**. A second steam line **92** provides steam to a second recirculation loop **94** in which the liquor is withdrawn from the digester **80** through the lower circulation screen **96** and sent to a lower heater **98**.

Chips are fed to the digester **80** through line **100**. Samples from the digester are withdrawn from the extraction liquor line **102** at withdrawal point **104**. For other tests, samples are withdrawn from the sample point **106** in the upper heater loop, sample point **108** in the lower heater loop, and sample point **110** in the white liquor supply line **82**. The samples are fed individually through 1.25 cm conduits by a means of valves, and merged with each other before flowing through either a transmittance-mode or a reflectance-mode flow-cell **46,** for which either mode is well-known in the art. Infrared light from an infrared source which is integral to a Fourier transform spectrometer **48** is brought to the flow-cell **46** by means of a direct optical coupling with mirrors or by a fiber optic cable **50**. Some of the infrared light is absorbed by the liquor and the residual light is returned to the Fourier transform spectrometer by means of either a direct optical coupling with mirrors or by a second fiber optic cable **50**. The spectrometer **48** records the near-infrared single-beam spectrum of the liquor. Readings from the spectrometer **48** are transferred to a computer **52** which determines the EA and sulfidity of the white liquor, and the EA and total organic content of the black liquor with the use of a PLS multicomponent calibration model. The white liquor EA is used to control the ratio of EA to wood in the digester by adjusting the feed rate of white liquor. Black liquor EA is used to ensure that the residual EA present in the cook zones is sufficient to ensure dissolution of the lignin present in wood chips while not exceeding a lower set-point and is achieved by adjusting the EA to wood ratio. White liquor sulfidity, black liquor EA and total organic content are used as a feedforward signal for kappa or k-number control by adjustment of the cooking conditions, such as temperature and time, of the digester. This can be done by adjusting the production rate and the temperature of the upper and/or lower circulation heaters **88** and **98**, respectively. The extraction liquor flows through line **102** to the flash tanks (not shown) on its way to the recovery cycle. Digested wood chips exit through the blow line **112** to the blow tank (not shown) before entering the brownstock washing stage.

**Fig. 12** shows the interface between the liquor sample and the Fourier transform spectrophotometer (e.g., Bomem, Hartmann and Braun, WorkIR 160) in greater detail. A beam of infrared light **114** leaves the infrared source **116** within the Fourier transform spectrometer, **48** and enters an interferometer **118**. Light **120** leaving the interferometer **118** enters an optional fiber-optic extension accessory **122** which includes (i) an entrance lens which concentrates the wide incoming beam (perhaps 30 mm) down onto the 0.6 mm diameter fiber, (ii) a variable length of fiber-optic cable (as much as 300 m or more), and (iii) an exit lens which expands the narrow beam of the fiber back to a wide beam of similar width to the incoming beam. The spectrometer may also be coupled directly to the transmission cell over relatively short distances by eliminating the fiber-optic extension accessory. The beam of infrared light **124** leaving the exit lens of the fiber-optic extension accessory is focussed through the 316 stainless steel transmission cell **126** by parabolic mirror **128.** The beam **130** passes through two caustic-resistant windows **132** (e.g. Harrick Scientific, BK-7) which contain the flowing or static liquor in the transmission cell **126**. The liquor arrives in and leaves from the transmission cell via **316** stainless steel sample conduit **134**. The infrared beam **136** is then redirected back into the spectrometer and onto the germanium (Ge) detector **138** via route **140** and **142** with the option of extending this distance with the fiber-optic extension accessory **144** in a similar way that the beam **120** leaving the interferometer **118** was extended. After a complete scan of the wavelength region of interest, the spectrometer transfers the resulting interferogram to an acquisition card located in an IBM-compatible personal computer **52** via serial cable **146**. The spectrum can then be computed by the acquisition card and several spectra (e.g. 128) can be co-added by the computer software. The resulting averaged spectrum can then be used to calculate the individual component concentrations of the liquor such as sodium hydroxide, sodium sulfide, sodium carbonate, and optionally, sodium chloride with the use of a PLS multi-component calibration model. The concentration parameters of conversion efficiency and/or causticity and/or total titratable alkali (TTA) are calculated from said concentrations automatically by the computer.

### EXAMPLE 1

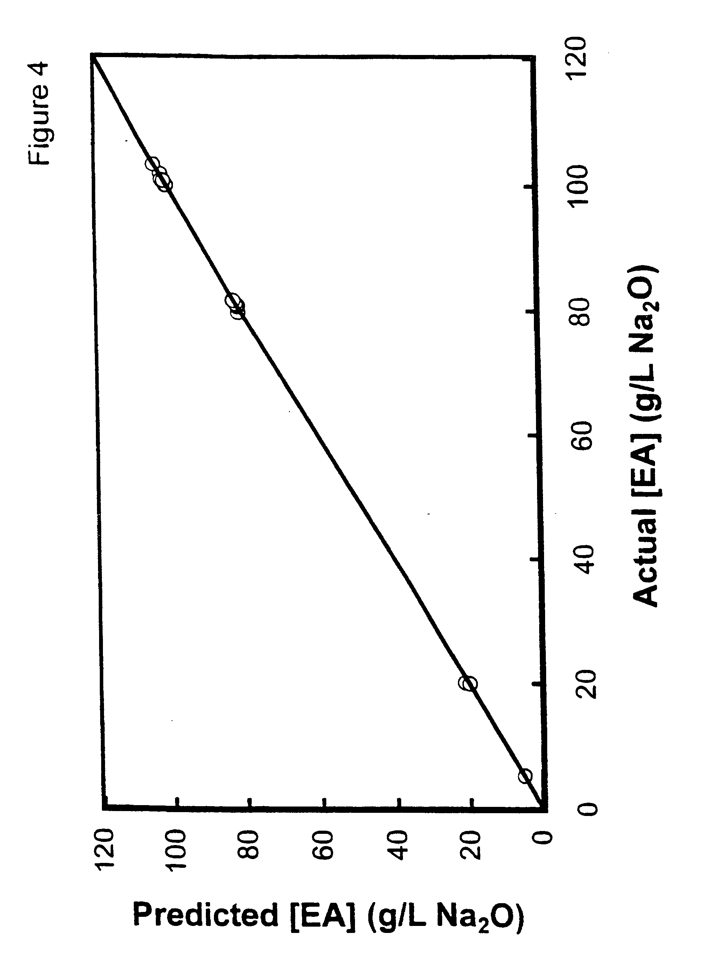

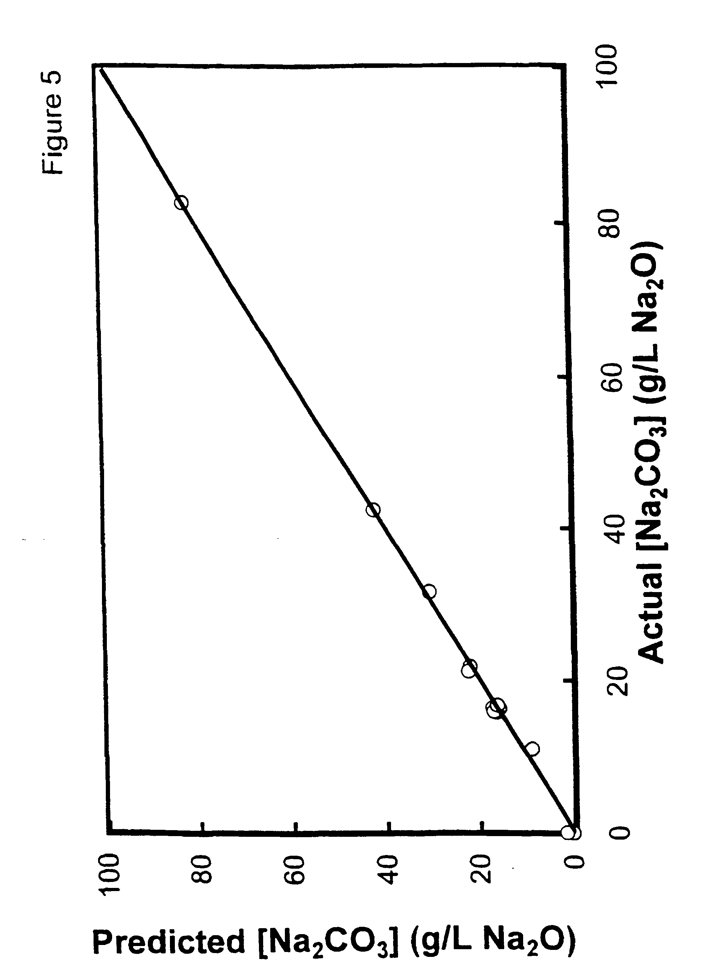

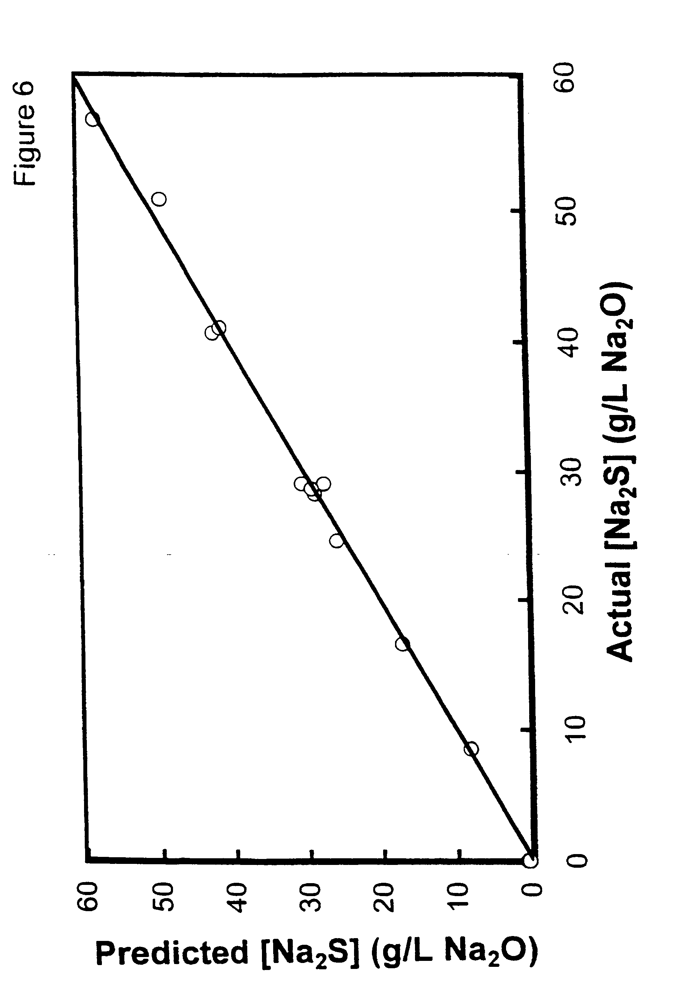

A three-component PLS calibration was performed on the set of synthetic samples listed in **Table I** for the purpose of building a calibration model that is capable of predicting 1) effective alkali concentrations 2) sodium sulfide concentrations and 3) sodium carbonate concentrations. The spectral region chosen for building the model was from 11000 to 7300 wavenumbers (cm⁻¹) for all three components. The calibration graphs are shown in **FIG. 4** (effective alkali), **FIG. 5** (carbonate) and **FIG. 6** (sulfidity), all of which demonstrate good agreement between predicted and actual values. The standard deviation of the differences between the actual and predicted values are (all in g/L as Na₂O) 0.34 for effective alkali, 1.0 for sulfidity, and 1.1 for carbonate. From the predicted concentrations shown herein, it is possible to calculate TTA, % sulfidity, and causticity for purposes of control.

**Table I**

| Compositions of synthetic liquor samples used for the three-component PLS Calibration | | | |
|---|---|---|---|
| Sample No. | Effective Alkali (g/L as Na₂O) | Sodium Sulfide (g/L as Na₂O) | Sodium Carbonate (g/L as Na₂O) |
| 1 | 100.2 | 0 | 0 |
| 2 | 5.2 | 0 | 0 |
| 3 | 102.0 | 24.6 | 0 |
| 4 | 103.5 | 56.8 | 0 |
| 5 | 101.0 | 0 | 42.5 |
| 6 | 100.2 | 0 | 82.8 |
| 7 | 100.9 | 50.9 | 21.8 |
| 8 | 20.2 | 40.7 | 0 |
| 9 | 79.9 | 28.3 | 11.0 |
| 10 | 81.0 | 29.1 | 21.2 |
| 11 | 81.9 | 29.1 | 31.6 |
| 12 | 81.0 | 8.5 | 16.4 |
| 13 | 80.8 | 16.6 | 16.3 |
| 14 | 81.1 | 28.7 | 15.8 |
| 15 | 81.3 | 41.1 | 15.9 |
| 16 | 20.0 | 0 | 0 |
| 17 | 81.8 | 0 | 16.7 |

### EXAMPLE 2

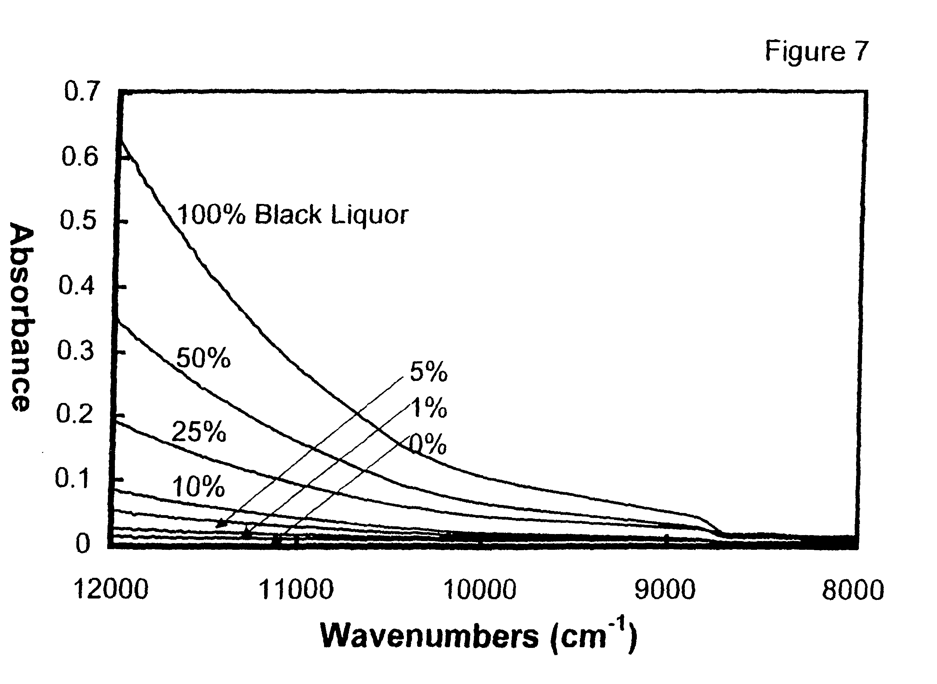

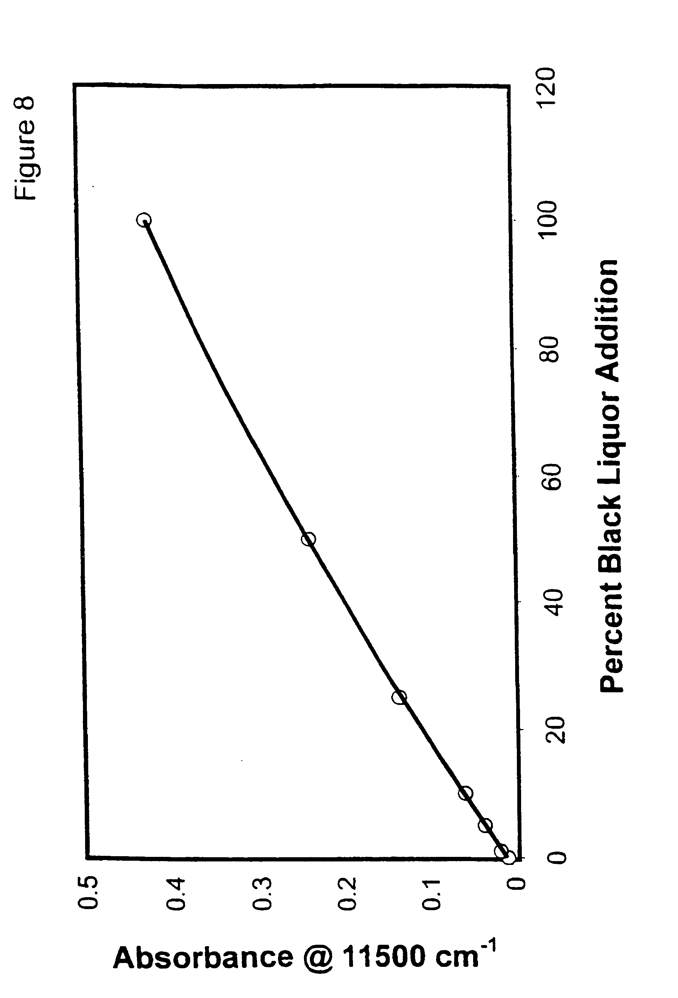

The absorbance spectra of samples consisting of various dilutions of a black liquor sample are shown in **FIG. 7**. There is clearly a strong correlation between the dilution of the black liquor and the absorbance in the region between wavenumbers 12000 to 9000 (cm⁻¹). A calibration graph is shown in **FIG. 8** based on the absorbance at 11500 wavenumbers (cm⁻¹). The trend is slightly non-linear, and a good fit is shown by the second order polynomial trendline.

### EXAMPLE 3

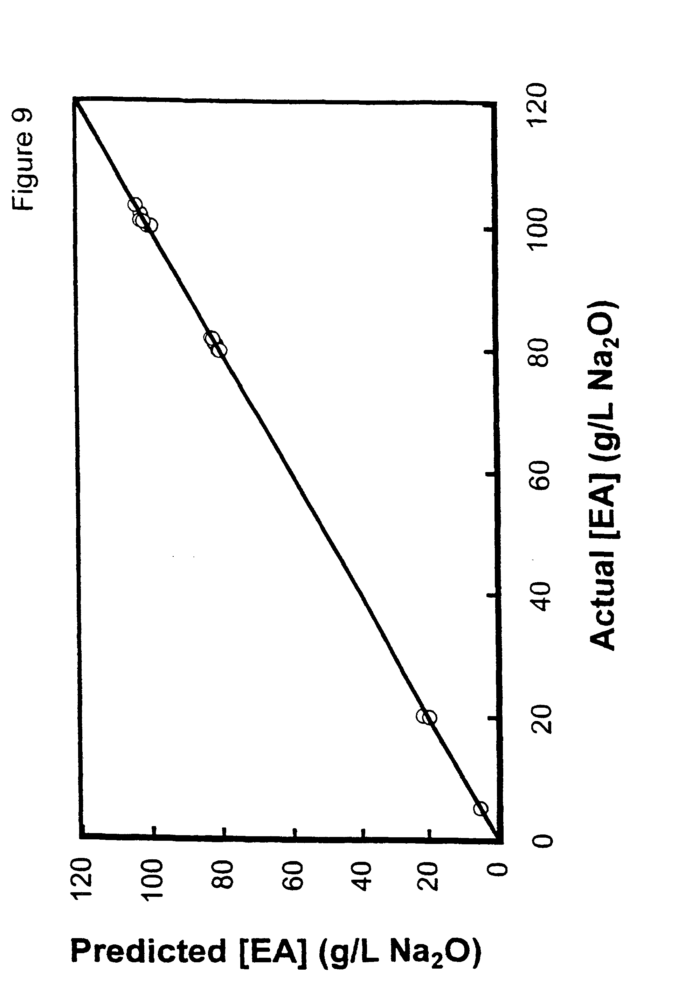

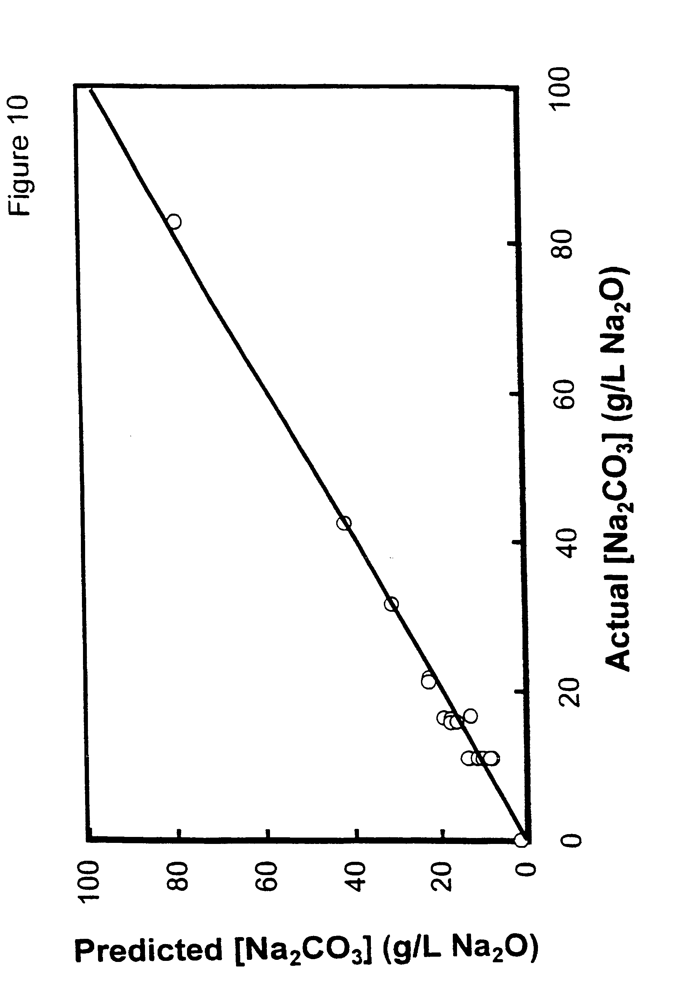

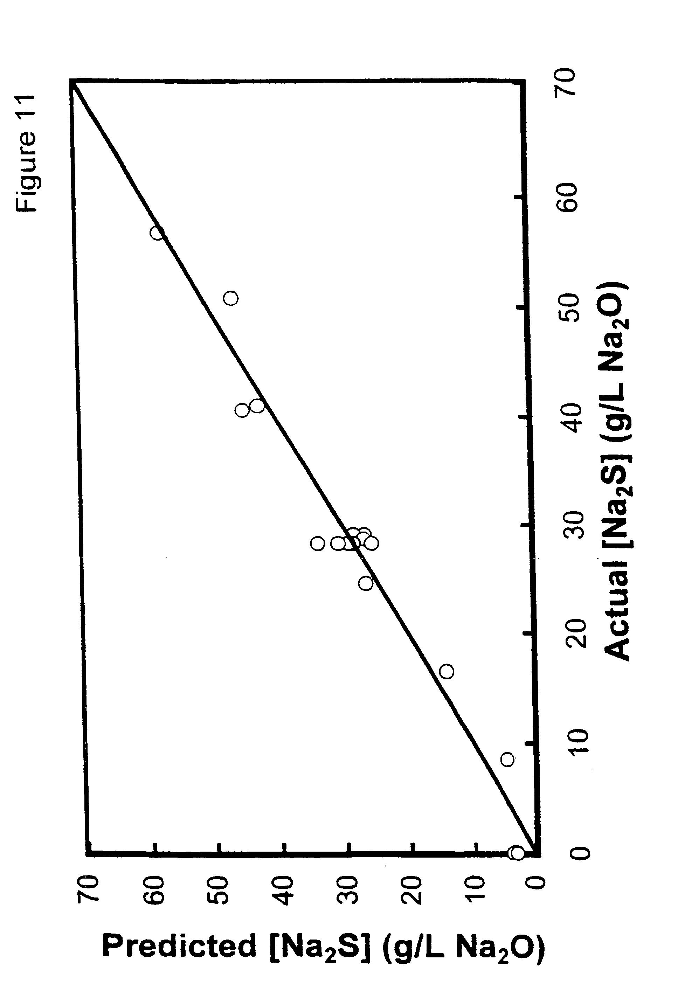

The accuracy of the PLS model calibrated for EA, sodium sulfide, and sodium carbonate concentrations was investigated to see how it was affected by varying sodium chloride concentrations from 0 to 40 g/L (as NaCl). Synthetic solutions were made up of fixed concentrations of EA, sodium sulfide, sodium carbonate, and varying concentrations of sodium chloride. The concentrations of all the components except sodium chloride were included in the model, which was generated from the samples in **Table I** (all of which contained no sodium chloride) and **Table II** (concentrations as shown). The model still accurately predicts EA (shown in **FIG. 9**), sodium carbonate (shown in **FIG. 10**), and sodium sulfide (shown in **FIG. 11**) for solutions regardless of sodium chloride concentration.

**Table II**

| Compositions of synthetic liquor samples added to three-component PLS Calibration | | | | |
|---|---|---|---|---|
| Sample No. | Effective Alkali (g/L as Na₂O) | Sodium Sulfide (g/L as Na₂O) | Sodium Carbonate (g/L as Na₂O) | Sodium Chloride (g/L as NaCl) |
| 18 | 79.9 | 28.3 | 11.0 | 0 |
| 19 | 79.9 | 28.3 | 11.0 | 10 |
| 20 | 79.9 | 28.3 | 11.0 | 20 |
| 21 | 79.9 | 28.3 | 11.0 | 30 |
| 22 | 79.9 | 28.3 | 11.0 | 40 |

From the above examples it can be seen that different types of process liquors in the cellulosic pulp manufacturing process can be analyzed and that concentration parameters can be simultaneously determined with the use of various types of partial least squares (PLS) multivariate calibration which correlate the spectral behavior for different concentrations of each chemical component in a calibration sample with their actual concentration in that sample. The set of correlations represents a model which can then be used to predict the concentration parameters of an unknown sample. Consequently, by varying at least one process variable, the process can be controlled so that optimal production of desired product is obtained.

### EXAMPLE 4

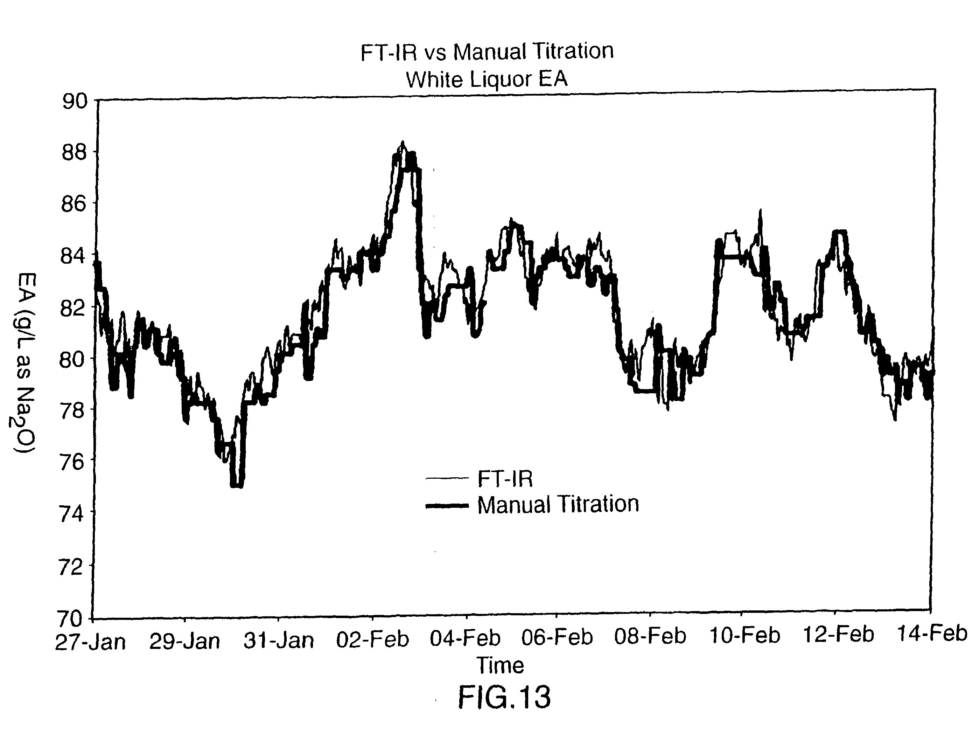

A multi-component PLS model was generated for white liquor using as many as 278 near infrared absorbance spectra of synthetic and real white liquor samples in the calibration training set. These training samples included variations in the concentration of EA, sulphide, carbonate, and chloride, as well as variations in the temperature of the sample liquor and the reference water. This model was applied to spectra collected by an on-line FT-IR spectrometer (Bomem, Hartmann & Braun, Workir 160) at the Bowater, Inc. kraft pulp mill in Thunder Bay, Ontario. FIG. 13 is a plot of the EA concentration of white liquor fed into the B digester at this mill over a period of approximately nineteen days, as measured by FT-IR and by manual titration with hydrochloric acid.

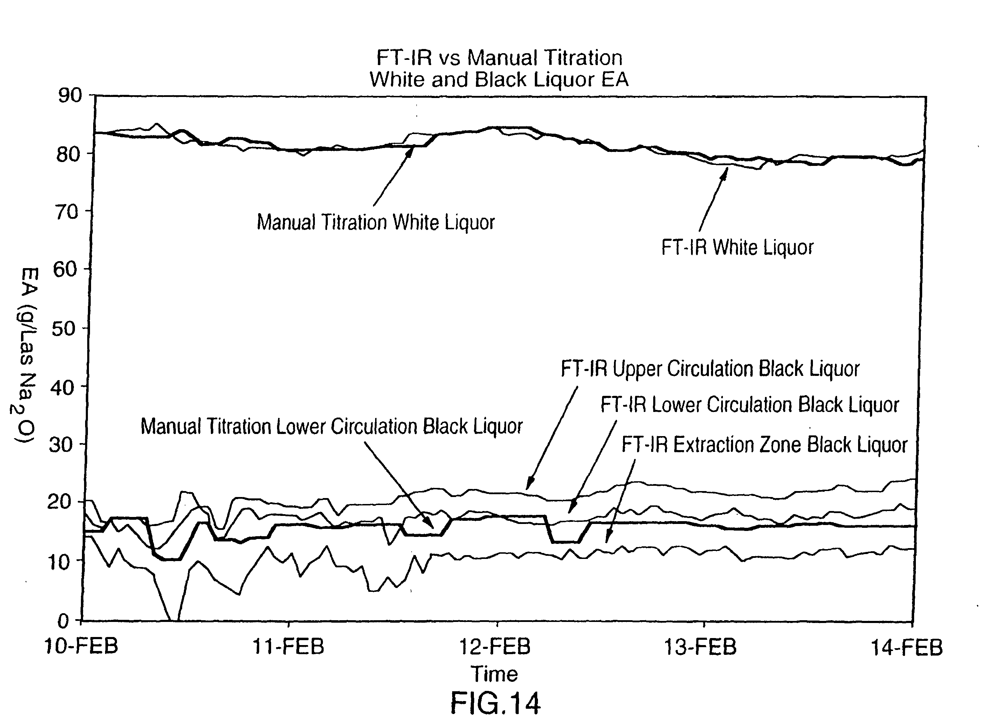

A one-component PLS model was generated for black liquor using as many as 457 near infrared absorbance spectra of synthetic and real white and black liquor samples in the calibration training set. FIG. 14 is a plot of the concentration of white liquor, upper circulation black liquor, lower circulation black liquor, and extraction zone black liquor at the Bowater, Inc. kraft pulp mill in Thunder Bay, Ontario. Data is shown for a period of approximately four days, as measured by FT-IR and by manual titration with hydrochloric acid. A shorter time period is presented for graphical clarity. Manual titration data is only collected by the mill personnel for EA on white liquor and lower circulation black liquor. This example demonstrates (1) long term correlation with manual titration results, (2) no instrumental drift, (3) no optical degradation, (4) accurate measurement in the presence of gaseous bubbles and solids, and (5) no plugging of the flow cell by solids or fibres since a large pathlength flow cell was used (8 mm) as stated in the present invention.

Thus, a rapid method is provided for the control of a cellulosic pulp manufacturing process via on-line measurement of chemical concentration parameters in process streams with near infrared radiation. This method eliminates the need for (i) manual sampling (ii) frequent equipment maintenance, (iii) a dedicated instrument at each sampling point, (iv) compensation for instrumental drift, and (v) an environmentally controlled spectrometer housing near the sampling location(s).

### EXAMPLE 5

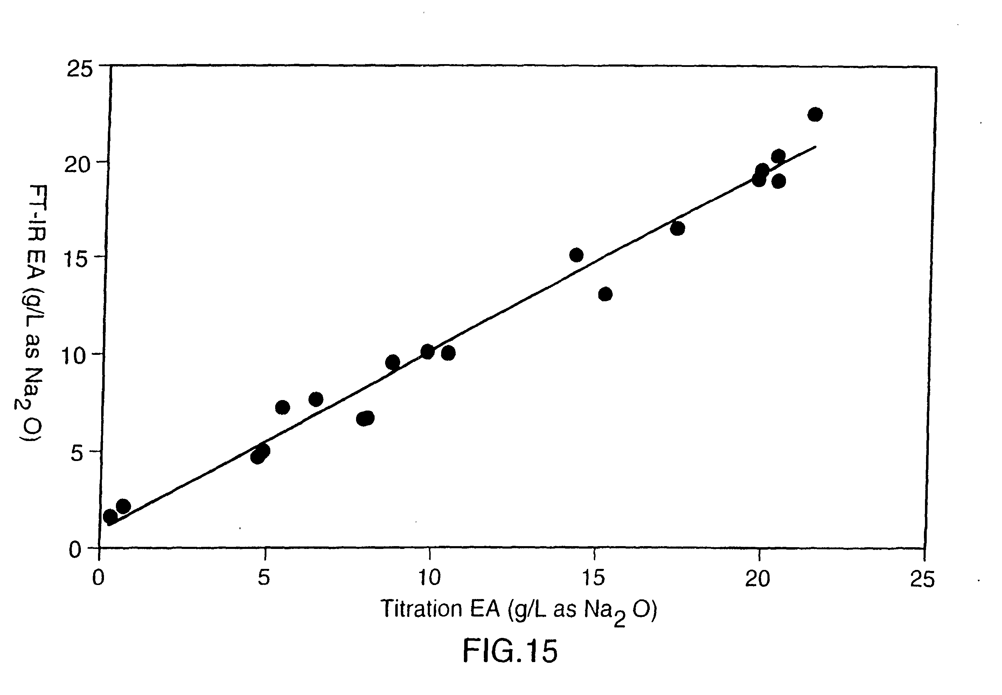

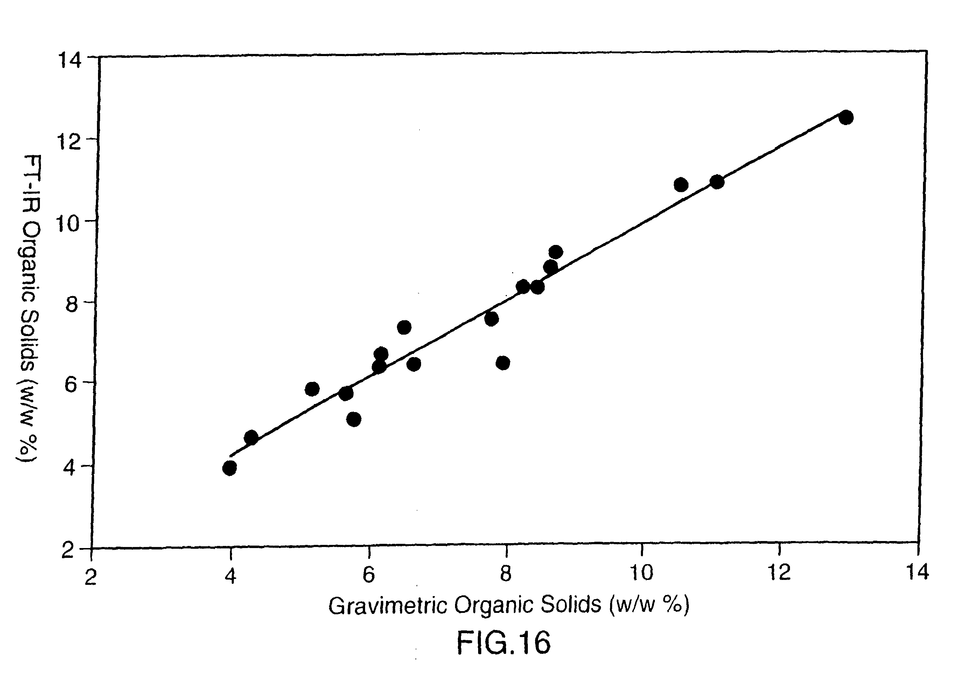

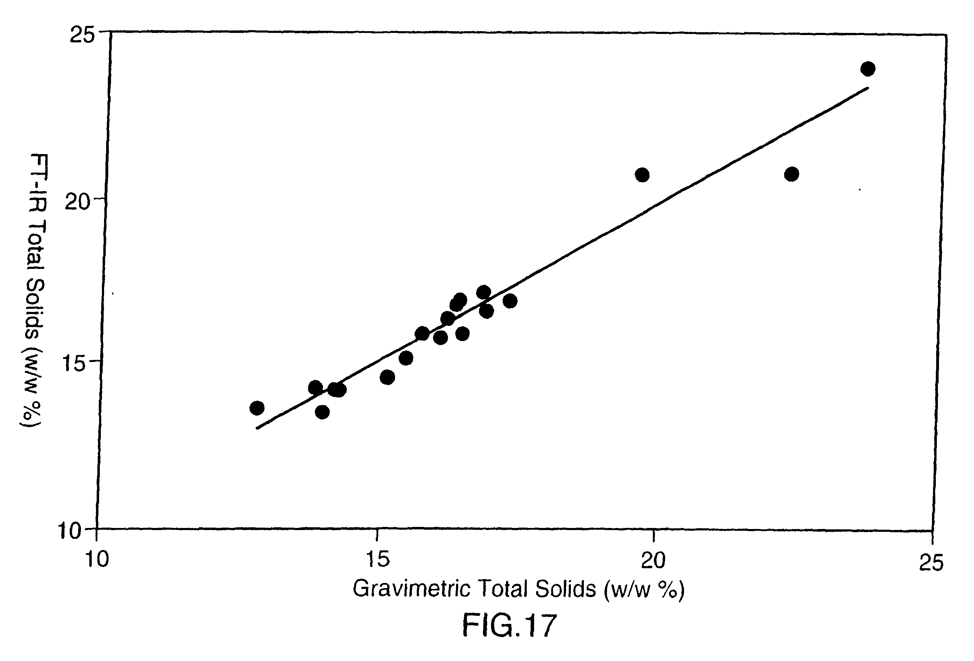

A three-component PLS calibration was performed on the infrared spectra of a set of nineteen black liquors collected from several kraft pulp mills across Canada. A calibration model was constructed that is capable of predicting (1) effective alkali (EA) concentrations, (2) organic solids content and (3) total solids content. Table III lists the concentrations of the effective alkali (g/L as Na₂O), organic solids (w/w %), and total solids (w/w %) content of these black liquor samples. The EA was determined by automatic titration with 1.00 N HC1 to an endpoint determined by the inflection of a pH versus volume of acid added curve between pH 11.0 and 11.5 in the presence of 0.1 M Na₂CO₃. The total solids content was determined gravimetrically by drying 25.00 mL of the black liquor sample to a constant weight in a drying oven at 105 ± 2"C the organic solids content was also determined gravimetrically by subtracting the mass obtained by igniting to a constant weight the remaining dried solids at 550 ± 25°C from the total solids content. The spectra were measured at a constant temperature of 30°C using a pathlength of 8 mm. The spectral region chosen for building the model was from 11533 to 7382 wavenumbers (cm⁻¹) for all three components. A pre-processing step of calculating a second derivative function with a 31-point Savitzky-Golay smoothing procedure was performed on the spectra prior to running the calibration. A total of three PLS factors were used for the predictions. The calibration graphs are shown in FIG. 15 (effective alkali), FIG 16 (organic solids) and FIG. 17 (total solids), all of which demonstrate good agreement between the FT-IR and the reference method values. Since total solids content is equal to the sum of the organic solids content and the inorganic solids content, the inorganic solids content can be calculated by determining the values of the organic and the total solids contents from the liquor. From these results, it is possible to calculate effective alkali, organic solids, inorganic solids, and total solids content.

**TABLE III**

| Compositions of mill black liquor samples used for the three-component PLS calibration | | | |
|---|---|---|---|
| Sample No. | Effective Alkali (g/L as Na₂O) | Organic Solids (w/w %) | Total Solids (w/w/ %) |
| 1 | 0.3 | 8.6 | 17.2 |
| 2 | 20.2 | 5.1 | 15.6 |
| 3 | 21.3 | 5.7 | 16.4 |
| 4 | 5.4 | 6.4 | 14.2 |
| 5 | 8 | 8.3 | 16.2 |
| 6 | 7.9 | 8.1 | 16.3 |
| 7 | 19.6 | 6.1 | 17.7 |
| 8 | 4.7 | 7.7 | 15.4 |
| 9 | 20.2 | 3.9 | 13.9 |
| 10 | 4.8 | 6.1 | 12.7 |
| 11 | 17.2 | 6.1 | 16.1 |
| 12 | 0.7 | 8.5 | 16.8 |
| 13 | 9.8 | 12.8 | 23.6 |
| 14 | 10.4 | 11.0 | 22.3 |
| 15 | 15.1 | 5.6 | 13.8 |
| 16 | 6.4 | 10.4 | 19.6 |
| 17 | 14.2 | 6.5 | 16.0 |
| 18 | 8.7 | 7.8 | 15.0 |
| 19 | 19.7 | 4.2 | 14.1 |

## Claims

1. A method for determining the concentration of anionic species selected from the group consisting of OH⁻, CO₃⁼, HS⁻ and organic species in an aqueous sample solution, said method comprising subjecting said solution to near infrared radiation at a wavelength region of wave numbers selected from about 7,000 to 14,000 cm⁻¹ through a solution path length to obtain spectral data for said solution; obtaining comparative spectral data for said anionic species at known concentrations in aqueous solutions; and correlating by multivariate calibration the relationships between said spectral data of said sample solution and said comparative spectral data to determine said concentration of said anionic species in said sample solution, **characterized in that** said path length is at least 3 mm.

2. A method as defined in claim 1 wherein said wavenumbers are selected from about 7,000 to 12,000 cm⁻¹.

3. A method as defined in claim 1 wherein said spectral data is transmittance spectra obtained by transmittance spectrophotometry.

4. A method as defined in claim 3 wherein said transmittance spectra is obtained by the reflectance of transmitted radiation with a reflectance cell.

5. A method as defined in claim 3 wherein said transmittance spectra is obtained from a direct coupled or a fibre-optic transmission probe.

6. A method as defined in claim 1 wherein said relationships between said spectral data of said sample and said comparative spectral data are obtained with a partial-least-squares multivariate calibration.

7. A method as defined in claim 1 wherein said path length is selected from 3-20 mm.

8. A method as defined in claim 7, wherein said path length is selected from 5-12 mm.

9. A method as defined in claim 1 wherein said solution contains at least two of said anionic species.

10. A method as defined in claim 1 wherein said solution contains at least two of said anionic species and said organic species.

11. A method as defined in claim 9 wherein said solution contains OH⁻ and said organic species.

12. A method as defined in claim 1 wherein said solution contains OH⁻, CO₃⁼ and HS⁻ anionic species.

13. A method as defined in claim 1 wherein said solution contains CI⁻.

14. A method as defined in claim 1 wherein said aqueous sample solution is a pulp liquor selected from the group consisting of black liquor, white liquor and green liquor.

15. A method for controlling the operation of individual unit operations within a cellulosic pulp manufacturing process, which method comprises the steps of subjecting samples of process liquors to near infrared radiation at a wavelength region of wavenumbers from about 7,000 to 14,000 cm⁻¹ through a process liquor path length to produce spectra of said liquor;
recording the spectrum of different mixture solution of synthetic and process liquors having known concentration parameters;
correlating by multivariate calibration the relationships between the spectra of the process liquor samples and the different mixture solutions of known concentration parameters so as to simultaneously determine concentration parameters in the process liquor samples; and
adjusting the individual unit operation of the cellulosic pulp manufacturing process as required by controlling at least one process parameter to bring the final product of said operation to a desired value, wherein said final product is determined in part by concentration parameters in said process liquors, as determined by the near infrared measurement of said concentration parameters, **characterised in that** said path length is at least 3 mm.

16. A method as defined in claim 15 wherein said wavenumbers are selected from about 7,000 to 12,000 cm.

17. A method as defined in claim 16 wherein said controlled unit operation is a recovery process, wherein (i) residual cooking liquor from a digester is concentrated through a series of evaporators so as to produce strong black liquor, (ii) the strong black liquor is burned in a recovery furnace, (iii) the resulting smelt from the recovery furnace is fed to a smelt-dissolving tank to form green liquor, (iv) the green liquor is passed through a green liquor clarifier and made to enter a slaker, and (v) calcium oxide is added to the green liquor in the slaker so as to form a suspension which proceeds through a causticizer to a white liquor clarifier and subsequently fed to the digester.

18. A method as defined in claim 15, wherein said controlled unit operation is a pulp digestion process and wherein (i) wood chips and white liquor are fed into a digestion vessel, (ii) the wood chips are cooked at the elevated temperature and pressure for a desired length of time, (iii) the cooking liquor is withdrawn from various locations within the digestion vessel during the cooking period and optionally returned after subsequent heating with a heat exchanger, (iv) the resulting digested wood chips are discharged into a blow tank, and (v) the residual weak black cooking liquor is optionally returned to said digestion vessel.

19. A method as defined in claim 15, wherein said controlled unit operation is a brown-stock washing process and wherein (i) digested pulp from a blow tank, is fed trough a series of washing steps, (ii) the filtrate from each of the washing stages is separated from the pulp and optionally returned to another washing stage, and (iii) the cleaned pulp leaves the brown-stock washing process and enters a process selected from screening and/or bleaching process.

20. A method as defined in claim 15, wherein said samples of process liquors contain dissolved sodium chloride.

21. A method as defined in claim 15, wherein said samples of process liquors contain suspended solids.

22. A method as defined in claim 15, wherein said samples of process liquors contain gaseous bubbles.

23. Apparatus for determining the concentration of an anionic species selected from the group consisting of OH⁻, CO₃⁼ and HS⁻ in an aqueous solution, said apparatus comprising sample means for providing a sample of said solution with a solution path length; Fourier transform near infrared means (48) for subjecting said solution over said path length to near infrared radiation at a wavelength region of wavenumbers selected from about 7,000 to 14,000 cm⁻¹, and spectral recordal means (52) for recording spectral data of said radiation after subjecting said solution to said radiation; **characterised in that** said path length is at least 3 mm; said radiation, **characterised in that** said path length is at least 3 mm.

24. Apparatus as defined in claim 23 wherein said infrared means (48) comprises means for subjecting said solution over said pathlength to said near infrared radiation at a wavelength region of wavenumbers selected from about 7,000 to 12,000 cm⁻¹.

25. Apparatus as defined in claim 23 wherein said sample means is a sample cell (46) having a path length selected from 3-20 mm.

26. Apparatus as defined in claim 23 wherein said sample means comprises a conduit having a path length selected from 3-20 mm.

27. Apparatus as defined in claim 25 wherein said cell has a path length selected from 5-12 mm.

28. Apparatus as defined in claim 23, wherein said spectral recordal means (52) comprises means for recording the radiation transmittal spectrum of said solution.

## Patentansprüche

1. Verfahren zum Bestimmen der Konzentration anionischer Spezies, ausgewählt aus der Gruppe bestehend aus OH⁻, CO₃⁼, HS⁻, und organischer Spezies in einer wässrigen Probenlösung, wobei das genannte Verfahren die folgenden Schritte umfasst: Aussetzen der genannten Lösung einer Strahlung im nahen Infrarotbereich in einem Wellenlängenbereich mit Wellenzahlen zwischen etwa 7000 und 14000 cm⁻¹ über ein Stück Lösungsweg, um Spektraldaten für die genannte Lösung zu erhalten; Erhalten von Vergleichsspektraldaten für die genannten anionischen Spezies bei bekannten Konzentrationen in wässrigen Lösungen; und Korrelieren der Beziehungen zwischen den genannten Spektraldaten der genannten Probenlösung und den genannten Vergleichsspektraldaten durch multivariante Kalibrierung, um die genannte Konzentration der genannten anionischen Spezies in der genannten Probenlösung zu bestimmen, **dadurch gekennzeichnet, dass** die genannte Weglänge wenigstens 3 mm beträgt.

2. Verfahren nach Anspruch 1, wobei die genannten Wellenzahlen zwischen etwa 7000 und 12000 cm⁻¹ liegen.

3. Verfahren nach Anspruch 1, wobei die genannten Spektraldaten Transmissionsspektren sind, die durch Transmissionsspektralfotometrie erhalten werden.

4. Verfahren nach Anspruch 3, wobei die genannten Transmissionsspektren durch die Reflexion übertragener Strahlung mit einer Reflexionszelle erhalten werden.

5. Verfahren nach Anspruch 3, wobei die genannten Transmissionsspektren von einer direktgekoppelten oder einer faseroptischen Transmissionssonde erhalten werden.

6. Verfahren nach Anspruch 1, wobei die genannten Beziehungen zwischen den genannten Spektraldaten der genannten Probe und den genannten Vergleichsspektraldaten mit einer partiellen multivarianten Kalibrierung nach der Methode der kleinsten Quadrate erhalten werden.

7. Verfahren nach Anspruch 1, wobei die genannte Weglänge zwischen 3 und 20 mm liegt.

8. Verfahren nach Anspruch 7, wobei die genannte Weglänge zwischen 5 und 12 mm liegt.

9. Verfahren nach Anspruch 1, wobei die genannte Lösung wenigstens zwei der genannten anionischen Spezies enthält.

10. Verfahren nach Anspruch 1, wobei die genannte Lösung wenigstens zwei der genannten anionischen Spezies und der genannten organischen Spezies enthält.

11. Verfahren nach Anspruch 9, wobei die genannte Lösung OH- und die genannten organischen Spezies enthält.

12. Verfahren nach Anspruch 1, wobei die genannte Lösung die anionischen Spezies OH⁻, CO₃⁼ und HS⁻ enthält.

13. Verfahren nach Anspruch 1, wobei die genannte Lösung Cl⁻ enthält.

14. Verfahren nach Anspruch 1, wobei die genannte wässrige Probenlösung eine Zellstofflauge ist, die ausgewählt ist aus der Gruppe bestehend aus Schwarzlauge, Weißlauge und Grünlauge.

15. Verfahren zur Regelung der Wirkungsweise individueller Einheitsoperationen innerhalb eines Zellulosezellstoffherstellungsprozesses, wobei das Verfahren die folgenden Schritte umfasst: Aussetzen von Prozesslaugenproben einer Strahlung im nahen Infrarotbereich in einem Wellenlängenbereich mit Wellenzahlen zwischen etwa 7000 und 14000 cm⁻¹ über ein Stück Prozesslaugenweg, um Spektren der genannten Lauge zu erzeugen;
Aufzeichnen des Spektrums verschiedener Mischlösungen aus Synthese- und Prozesslaugen mit bekannten Konzentrationsparametern;
Korrelieren der Beziehungen zwischen den Spektren der Prozesslaugenproben und den verschiedenen Mischlösungen mit bekannten Konzentrationsparametern durch multivariante Kalibrierung, um simultan Konzentrationsparameter in den Prozesslaugenproben zu bestimmen; und
bedarfsabhängiges Anpassen der individuellen Einheitsoperation des Zellulosezellstoffherstellungsprozesses durch Regeln von wenigstens einem Prozessparameter, um das Endprodukt der genannten Operation auf einen gewünschten Wert zu bringen, wobei das genannte Endprodukt zum Teil durch Konzentrationsparameter in den genannten Prozesslaugen bestimmt wird, wie anhand der Messung im nahen Infrarotbereich der genannten Konzentrationsparameter bestimmt, **dadurch gekennzeichnet, dass** die genannte Weglänge wenigstens 3 mm beträgt.

16. Verfahren nach Anspruch 15, wobei die genannten Wellenzahlen zwischen etwa 7000 und 12.000 cm liegen.

17. Verfahren nach Anspruch 16, wobei die genannte geregelte Einheitsoperation ein Wiedergewinnungsprozess ist, wobei (i) Kochlaugenreste von einem Kocher durch eine Reihe von Verdampfern konzentriert werden, um eine starke Schwarzlauge zu produzieren, (ii) die starke Schwarzlauge in einem Schmelzofen verbrannt wird, (iii) die resultierende Schmelze von dem Schmelzofen zu einem Lösetank geführt wird, um Grünlauge zu bilden, (iv) die Grünlauge durch einen Grünlaugenklärer in einen Kalklöscher geführt wird, und (v) Calciumoxid zur Grünlauge in dem Kalklöscher gegeben wird, um eine Suspension zu bilden, die durch einen Kaustifizierbehälter zu einem Weißlaugenklärer läuft und anschließend in den Kocher gespeist wird.

18. Verfahren nach Anspruch 15, wobei die genannte geregelte Einheitsoperation ein Zellstoffaufschlussprozess ist, wobei (i) Holzschnitzel und Weißlauge in ein Aufschlussgefäß gespeist werden, (ii) die Holzschnitzel bei erhöhter Temperatur und Druck über eine gewünschte Zeitdauer gekocht werden, (iii) die Kochlauge verschiedenen Stellen innerhalb des Aufschlussgefäßes im Laufe der Kochdauer entnommen und bei Bedarf im Anschluss an eine nachfolgende Erwärmung mit einem Wärmeaustauscher zurückgeführt wird, (iv) die resultierenden aufgeschlossenen Holzschnitzel in einen Blastank abgegeben werden und (v) der schwache schwarze Kochlaugenrest bei Bedarf zu dem genannten Aufschlussgefäß zurückgeführt wird.

19. Verfahren nach Anspruch 15, wobei die genannte geregelte Einheitsoperation ein Sulfatzellstoffwaschprozess ist, wobei (i) aufgeschlossener Zellstoff aus einem Blastank durch eine Reihe von Waschschritten geführt wird, (ii) das Filtrat aus den jeweiligen Waschstufen von dem Zellstoff getrennt und bei Bedarf zu einer anderen Waschstufe zurückgeführt wird, und (iii) der gereinigte Zellstoff den Sulfatzellstoffwaschprozess verlässt und in einen Prozess eintritt, der ausgewählt wird aus einem Sieb- und/oder Bleichprozess.

20. Verfahren nach Anspruch 15, wobei die genannten Prozesslaugenproben aufgelöstes Natriumchlorid enthalten.

21. Verfahren nach Anspruch 15, wobei die genannten Prozesslaugenproben suspendierte Feststoffe enthalten.

22. Verfahren nach Anspruch 15, wobei die genannten Prozesslaugenproben gasförmige Bläschen enthalten.

23. Vorrichtung zum Bestimmen der Konzentration einer anionischen Spezies, ausgewählt aus der Gruppe bestehend aus OH⁻, CO₃⁼ und HS⁻, in einer wässrigen Lösung, wobei die genannte Vorrichtung Folgendes umfasst: ein Probenmittel, um eine Probe der genannten Lösung mit einem Stück Lösungsweg bereitzustellen; ein Fourier-Transformations-NIR-Mittel (48), um die genannte Lösung über die genannte Weglänge einer Strahlung im nahen Infrarotbereich in einem Wellenlängenbereich mit Wellenzahlen zwischen etwa 7000 und 14000 cm⁻¹ auszusetzen, und ein Spektralaufzeichnungsmittel (52) zum Aufzeichnen von Spektraldaten der genannten Strahlung, nachdem die genannte Lösung der genannten Strahlung ausgesetzt wurde; **dadurch gekennzeichnet, dass** die genannte Weglänge wenigstens 3 mm beträgt; die genannte Strahlung, **dadurch gekennzeichnet, dass** die genannte Weglänge wenigstens 3 mm beträgt [sic].

24. Vorrichtung nach Anspruch 23, wobei das genannte Infrarotmittel (48) ein Mittel zum Aussetzen der genannten Lösung über die genannte Weglänge der genannten Strahlung im nahen Infrarotbereich in einem Wellenlängenbereich mit Wellenzahlen zwischen etwa 7000 und 12.000 cm⁻¹ umfasst.

25. Vorrichtung nach Anspruch 23, wobei das genannte Probenmittel eine Probenzelle (46) mit einer Weglänge zwischen 3 und 20 mm ist.

26. Vorrichtung nach Anspruch 23, wobei das genannte Probenmittel eine Leitung mit einer Weglänge zwischen 3 und 20 mm umfasst.

27. Vorrichtung nach Anspruch 25, wobei die genannte Zelle eine Weglänge zwischen 5 und 12 mm hat.

28. Vorrichtung nach Anspruch 23, wobei das genannte Spektralaufzeichnungsmittel (52) ein Mittel zum Aufzeichnen des Strahlungstransmissionsspektrum der genannten Lösung umfasst.

## Revendications

1. Un procédé pour la détermination de la concentration d'espèces anioniques sélectionnées parmi le groupe comprenant OH⁻, CO₃⁼, HS⁻ et des espèces organiques dans une solution échantillon aqueuse, ledit procédé comprenant la soumission de ladite solution à un rayonnement infrarouge proche, dans une région de longueurs d'onde à nombres d'ondes sélectionnés entre environ 7000 et 14 000 cm⁻¹ sur une longueur de trajet d'absorption de la solution pour acquérir des informations spectrales sur ladite solution ; l'acquisition d'informations spectrales comparatives sur lesdites espèces anioniques à des concentrations connues dans des solutions aqueuses et la corrélation, par étalonnage à variables multiples, des relations entre lesdites informations spectrales de ladite solution échantillon et lesdites informations spectrales comparatives pour déterminer ladite concentration desdites espèces anioniques dans ladite solution échantillon, **caractérisé en ce que** ladite longueur de trajet d'absorption égale au minimum 3 mm.

2. Un procédé selon la revendication 1, selon lequel lesdits nombres d'ondes sont sélectionnés entre 7000 et 12000 cm⁻¹.

3. Un procédé selon la revendication 1, selon lequel lesdites informations spectrales sont des spectres de transmittance acquis par spectrophotométrie de transmittance.

4. Un procédé selon la revendication 3, selon lequel lesdits spectres de transmittance sont acquis par la réflectance des rayonnements transmis avec une cellule à réflectance.

5. Un procédé selon la revendication 3, selon lequel lesdits spectres de transmittance sont acquis à partir d'une sonde de transmission à couplage direct ou à fibre optique.

6. Un procédé selon la revendicaton 1, selon lequel lesdites relations entre lesdites informations spectrales dudit échantillon et lesdites informations spectrales comparatives sont acquises au moyen d'un étalonnage partiel à variables multiples, selon la méthode des plus petits carrés.

7. Un procédé selon la revendication 1, selon lequel ladite longueur de trajet d'absorption est sélectionnée entre 3 et 20 mm.

8. Un procédé selo la revendication 7, selon lequel ladite longueur de trajet d'absorption est sélectionnée entre 5 et 12 mm.

9. Un procédé selon la revendication 1, selon lequel ladite solution contient au moins deux desdites espèces anioniques.

10. Un procédé selon la revendication 1, selon lequel ladite solution contient au moins deux desdites espèces anioniques, et ladite espèce organique.

11. Un procédé selon la revendication 9, selon lequel ladite solution contient OH⁻, et ladite espèce organique.

12. Un procédé selon la revendication 1, selon lequel ladite solution contient et les espèces anioniques OH⁻, CO₃⁼ et HS⁻.

13. Un procédé selon la revendication 1, selon lequel ladite solution contient CI⁻.

14. Un procédé selon la revendication 1, selon lequel ladite solution échantillon aqueuse est une liqueur de pâte sélectionnée parmi le groupe composé des liqueurs noire, blanche et verte.

15. Un procédé pour contrôler l'opération d'unités individuelles qui font partie d'un procédé de fabrication de pâte cellulosique, ledit procédé comprenant les étapes consistant à soumettre des échantillons de liqueurs de procédé à un rayonnement infrarouge proche auniveau d'une région de longueurs d'ondes à nombres d'ondes sélectionnés entre environ 7000 et 14000 cm⁻¹ à travers une longueur de trajet de liqueur de procédé, pour produire des spectres de ladite liqueur ;
à enregistrer le spectre de solutions de mélanges différents de liqueurs synthétiques et de liqueurs de procédé ayant des paramètres de concentration connus ;
à mettre en corrélation, par étalonnage à variables multiples, les relations entre les spectres des échantillons de liqueurs de procédé et des solutions de mélanges différents dont les paramètres de concentration sont connus, de sorte à déterminer simultanément les paramètres de concentration dans les échantillons de liqueurs de procédé ; et
à ajuster l'opération des unités individuelles du procédé de fabrication de pâte cellulosique selon les besoins, en contrôlant au moins un paramètre du procédé pour amener le produit final de l'opération de ladite unité jusqu'à une valeur souhaitée, ledit produit final étant déterminé en partie par des paramètres de concentration dans lesdites liqueurs de procédé, tels que déterminés par la mesure par infrarouge proche desdits paramètres de concentration, **caractérisé en ce que** ladite longueur de trajet d'absorption égale au minimum 3 mm.

16. Un procédé selon la revendication 15, selon lequel lesdits nombres d'ondes sont sélectionnés entre environ 7000 et 12000 cm.

17. Un procédé selon la revendication 16, selon lequel l'opération desdites unités contrôlées fait partie d'un procédé de récupération dans le cadre duquel (i) la liqueur de cuisson résiduelle qui provient d'un digesteur est concentrée dans une série d'évaporateurs, de sorte à produire une liqueur noire épaisse, (ii) la liqueur noire épaisse est chauffée dans un four de récupération, (iii) la matière en fusion résultante, qui provient du four de récupération, est envoyée dans un dissolveur pour former la liqueur verte, (iv) la liqueur verte est envoyée à travers un décanteur de liqueur verte avant de pénétrer dans un extincteur et, (v) de l'oxyde de calcium est ajouté à la liqueur verte dans l'extincteur de sorte à former une suspension qui passe dans une unité de caustification avant d'atteindre un décanteur de liqueur blanche, puis d'être envoyée dans le digesteur.

18. Un procédé selon la revendication 15, selon lequel ladite opération des unités contrôlées fait partie d'un procédé de digestion de pâte cellulosique et selon lequel (i) des copeaux de bois et de la liqueur blanche sont envoyés dans un digesteur, (ii) les copeaux de bois sont cuits à des températures et pressions élevées pendant une période souhaitée, (iii) la liqueur de cuisson est soutirée en divers points du digesteur pendant la période de cuisson et retournée, en option, après chauffage ultérieur avec un échangeur de chaleur, (iv) les copeaux de bois digérés résultants sont déchargés dans un blow-tank et, (v) la liqueur de cuisson noire faible résiduelle est, en option, renvoyée vers ledit digesteur.

19. Un procédé selon la revendication 15, selon lequel ladite opération des unités contrôlées est un procédé de lavage de pâte brune, et selon lequel (i) une pâte digérée provenant d'un blow-tank est soumise à une série d'étapes de lavage, (ii) le filtrat résultant de chacune des étapes de lavage est séparé de la pâte et, en option, renvoyé vers une autre étape de lavage et, (iii) la pâte nettoyée quitte le circuit de lavage de pâte brune et entre dans un circuit de procédé qui peut être un circuit d'épuration et/ou de blanchiment.

20. Un procédé selon la revendication 15, selon lequel lesdits échantillons de liqueurs de procédé contiennent du chlorure de sodium dissous.

21. Un procédé selon la revendication 15, selon lequel lesdits échantillons de liqueurs de procédé contiennent des solides en suspension.

22. Un procédé selon la revendication 15, selon lequel lesdits échantillons de liqueurs de procédé contiennent des bulles de gaz.

23. Appareil pour déterminer la concentration d'une espèce anionique sélectionnée parmi le groupe comprenant OH⁻, CO₃⁼ et HS⁻ dans une solution aqueuse, ledit appareil comprenant des moyens d'échantillonnage pour fournir un échantillon de ladite solution avec une longueur donnée de trajet d'absorption ; des moyens à infrarouge proche avec transformée de Fourier (48), pour soumettre ladite solution, sur ladite longueur de trajet d'absorption, à un rayonnement infrarouge proche au niveau d'une région de longueurs d'ondes à nombres d'ondes sélectionnés entre environ 7000 et 14000 cm⁻¹, et des moyens d'enregistrement de spectres (52) pour enregistrer des informations spectrales sur ledit rayonnement après avoir soumis ladite solution audit rayonnement ; **caractérisé en ce que** ladite longueur de trajet d'absorption égale au minimum 3 mm.

24. Appareil selon la revendication 23, dans lequel lesdits moyens à infrarouge proche (48) comprennent des moyens pour soumettre ladite solution, sur ledit trajet d'absorption, audit rayonnement infrarouge proche au niveau d'une région de longueurs d'ondes à numéros d'ondes sélectionnés entre environ 7000 et 12000 cm⁻¹.

25. Appareil selon la revendication 23, dans lequel lesdits moyens d'échantillonnage comportent une cellule d'échantillonnage (46) ayant une longueur de trajet d'absorption sélectionnée entre 3 et 20 mm.

26. Appareil selon la revendication 23, dans lequel lesdits moyens d'échantillonnage comprennent un conduit ayant une longueur de trajet d'absorption sélectionnée entre 3 et 20 mm.

27. Appareil selon la revendication 25, dans lequel ladite cellule a une longueur de trajet d'absorption sélectionnée entre 5 et 12 mm.

28. Appareil selon la revendication 23, dans lequel lesdits moyens d'enregistrement de spectres (52) comprennent des moyens pour enregistrer le spectre de transmission de ladite solution.
